# EUROPÄISCHE PATENTANMELDUNG

(11) **EP 3 945 702 A1**
(43) Veröffentlichungstag der Anmeldung: **02.02.2022**
(21) Anmeldenummer: 20187937.6
(22) Anmeldetag: 27.07.2020
(51) Int. Cl.: H04L 29/06

(54) **KANALBASIERTE KOMMUNIKATION IN EINEM IOT-NETZWERK**

(71) Anmelder: Siemens Aktiengesellschaft, 80333 München (DE)
(72) Erfinder: Jetzfellner, Thomas, 85609 Aschheim (DE); Sauer, Markus, 81739 München (DE)

(57) **Zusammenfassung**

Ein Knoten eines Internet-of-Things (IoT) -Netzwerks, in welchem durch Merkmale gekennzeichnete Transaktionen von einer Vielzahl von Knoten des Netzwerks übertragen und verteilt gespeichert werden, stellt ein Kriterienprofil des Knoten bereit, durch welches ein oder mehrere Merkmale von Transaktionen festgelegt sind, die an den Knoten übertragen werden sollen. Eine Netzwerkapplikation des Netzwerks überträgt ausschließlich Transaktionen entsprechend dem Kriterienprofil an den Knoten.

## Beschreibung

Die vorliegende Erfindung betrifft im Allgemeinen einen Knoten eines Netzwerks, und insbesondere einen Knoten eines Internet-of-Things- (IoT-) Netzwerks zur Steuerung eines technischen Systems. Weiterhin werden eine entsprechende Netzwerkapplikation, eine Netzwerkinfrastruktur sowie entsprechende Verfahren, Computerprogramme und elektronisch lesbare Datenträger bereitgestellt.

### Technischer Hintergrund

Im digitalen industriellen Umfeld ist die Vernetzung von Edge-Devices und IoT-Geräten ein wichtiger Aspekt. Insbesondere das Bilden von Ökosystemen, bei denen diese entsprechenden Geräte bzw. eine Vielzahl solcher Geräte miteinander kommunizieren, um Prozesse zu steuern, ist eine Herausforderung. Eine besondere Herausforderung ist dabei die Kommunikation in Systemen mit unterschiedlichen Geräteherstellern oder Geräteeigentümern, die sich nicht zwangsläufig vertrauen. Seit einigen Jahren sind dezentrale Kommunikationsinfrastrukturen verfügbar, die eine vertrauenswürdige Kommunikation zwischen solchen Geräten selbst in einer als nicht vertrauenswürdig eingestuften Umgebung, in manchen Fällen ohne zentrale vertrauensbildende Drittpartei, erlauben. Eine solche Technologie sind zum Beispiel Distributed Ledger (DLT) -Technologien.

Eine Netzwerkapplikation, die beispielsweise als P2P-Kommunikationssystem, Cloud, verteilte Datenbank, Distributed Ledger, oder Blockchain ausgeführt sein kann, erlaubt die Implementierung eines verteilten IoT-Ökosystems mit verschiedenen Stakeholdern, die sich nicht zwangsläufig vertrauen. Mittels einer solchen Netzwerkapplikation ist es möglich eine P2P-Infrastruktur mit verschiedenen Stakeholdern zu realisieren, wobei ein Vertrauen selbst in einer nicht vertrauenswürdigen Umgebung durch technische Maßnahmen realisiert werden kann.

Problematisch beim Einsatz beispielsweise von DLT ist, dass an einzelne IoT-Knotengeräte große Datenmengen übertragen werden, die für diese irrelevant sind. Daraus resultieren Probleme hinsichtlich Bandbreitenauslastung, Speicherauslastung des IoT-Gerätes und eine unnötige Auslastung des Prozessors eines solchen IoT-Gerätes.

### Zusammenfassung

Daher besteht Bedarf an verbesserten Techniken für Netzwerke, die zumindest einige der genannten Einschränkungen und Nachteile überwinden oder abmildern.

Diese Aufgabe wird mit den Merkmalen der unabhängigen Ansprüche gelöst. In den abhängigen Ansprüchen sind weitere vorteilhafte Ausführungsbeispiele der Erfindung beschrieben.

Im Folgenden wird die erfindungsgemäße Lösung in Bezug auf einen beanspruchten Knoten eines Netzwerks und eine beanspruchte Netzwerkapplikation, als auch in Bezug auf die beanspruchten Verfahren beschrieben. Merkmale, Vorteile oder alternative Ausführungsbeispiele können den jeweils anderen beanspruchten Kategorien zugeordnet werden, und umgekehrt. In anderen Worten, die Ansprüche für den Knoten und die Netzwerkapplikation können auch durch Merkmale verbessert werden, die im Rahmen der Verfahren beschrieben und/oder beansprucht werden, und umgekehrt.

In einem Netzwerk werden Transaktionen an einen oder mehrere Knoten des Netzwerks gesendet, wobei eine Transaktion durch ein oder mehrere Merkmale gekennzeichnet ist. Ein Netzwerk kann beispielsweise als eine Netzwerkapplikation, ein Internet-of-Things-System, ein P2P- Netzwerk, eine dezentrale Netzwerkstruktur, d.h. ohne zentrale Instanz, eine dezentrale verteilte Datenbank, ein DLT basierte Datenbank, eine Blockchain, oder eine beliebige Kombination davon ausgebildet sein.

Besonders vorteilhaft können die offenbarten Techniken in einem dezentralen Steuerungsnetzwerk eines technischen Systems, insbesondere einem IoT-Netzwerk mit IoT-Geräten und Edge-Geräten als Knoten, eingesetzt werden. In einer dezentralen verteilten Netzwerkstruktur können beispielsweise eine Vielzahl von gleichberechtigten Knoten untereinander Daten austauschen, weiterleiten, senden, empfangen und/oder Transaktionen manipulationssicher in einer DLT basierten Datenbank, beispielsweise einer Blockchain, speichern.

Ein Knoten kann beispielsweise einen Netzwerkknoten, Datenbankknoten, IoT-Gerät oder Edge-Gerät eines industriellen I-oT-Systems, ein Steuergerät und/oder Komponente eines technischen Systems, ein Knoten einer Blockchain oder einer DLT basierten Datenbank, oder eine beliebige Kombination davon umfassen.

Eine Netzwerkapplikation kann beispielsweise eine Datenbank, eine dezentrale Datenbank, eine Cloud, ein Cloud-Service, ein (distributed) Ledger, eine IoT-Infrastruktur oder eine Blocckette sein oder mittels der gerade genannten Beispiele implementiert werden.

Eine Transaktion kann beispielsweise eines oder mehrere umfassen von einer Aufgabe oder Anweisung für das technische System, einer oder mehrere Dateneinheiten, Datenblöcke, Steuerbefehle, Programmbefehle, ein Steuerungsprogramm, ein Computerprogramm, Anweisungen, ein Smart-Contract, Chain-Code, Steuerinformationen, Sensordaten eines technischen Systems, von einem Benutzer eingegebene Daten, und im allgemeinen Daten, welche in dem Netzwerk oder dem technischen System erzeugt wurden, oder welche von dem Netzwerk erhalten werden, und/oder übertragen werden. Insbesondere kann eine Transaktion einen oder mehrere Datenblöcke umfassen, welche innerhalb einer Netzwerkapplikation oder einer DLT basierten Datenbank, insbesondere einer Blockchain, innerhalb der Knoten des Netzwerks gespeichert werden.

Ein Knoten des Netzwerks ist derart konfiguriert, dass er ein Kriterienprofil des Knoten aufweist. Das Kriterienprofil des Knoten parametrisiert, oder umfasst ein oder mehrere Merkmale von Transaktionen, die an den Knoten übertragen werden sollen und vorzugsweise von dem Knoten gespeichert werden. Beispielsweise soll nur eine Transaktion, welche durch ein Merkmal oder mehrere Merkmale gekennzeichnet ist, welche auch in dem Kriterienprofil des Knoten enthalten sind, an den Knoten gesendet, von dem Knoten empfangen und/oder durch den Knoten gespeichert werden.

Beispielsweise kann das Kriterienprofil Merkmale umfassen, wobei durch das Kriterienprofil diese Merkmale bestimmt oder festgelegt werden können, um basierend auf den Merkmalen zu entscheiden, ob eine Transaktion dem Kriterienprofil entspricht. Dabei soll im Allgemeinen eine direkte oder indirekte Definition von Merkmalen durch das Kriterienprofil eingeschlossen sein.

Unter Umfassen eines Kriterienprofils kann beispielsweise auch ein Bereitstellen des Kriterienprofils an andere Knoten oder eine Netzwerkapplikation des Netzwerks verstanden werden, oder ein Empfangen eines vorgegebenen Kriterienprofils für den Knoten von anderen Knoten oder einer Netzwerkapplikation, ein Speichern und/oder Auslesen aus einem internen Speicher des Knoten, ein Übertragen eines Kriterienprofils durch den Knoten um das Kriterienprofil anderen Netzwerkteilnehmern verfügbar zu machen, oder ein dynamisches Erstellen eines Kriterienprofils durch den Knoten in Reaktion z.B. auf ein Ereignis innerhalb des Netzwerkes oder innerhalb des Knoten bzw. eines Teils eines technischen Systems, das mit dem Knoten verbunden ist, sowie eine beliebige Kombination davon. Beispielsweise kann ein Kriterienprofil für einen Knoten vorbestimmt sein, oder aufgrund eines Ereignisses in dem Netzwerk dynamisch, beispielsweise während des Betriebs des technischen Systems, angepasst und/oder aktualisiert werden.

Ein Senden oder Übertragen einer Transaktion von einem Knoten, direkt oder gegebenenfalls indirekt weitergeleitet über einen oder mehrere Knoten des Netzwerks, zu einem anderen Knoten kann ein Routen der Transaktion, d.h. von Dateneinheiten, in Abhängigkeit von dem Kriterienprofil umfassen.

In einigen Beispielen können ausschließlich derartige Transaktionen an den Knoten gesendet werden und/oder von den Knoten empfangen und/oder gespeichert werden, die durch das Kriterienprofil des Knoten festgelegt sind, d.h. die dem Kriterienprofil entsprechen. In einigen Beispielen werden Transaktionen, welche das Kriterienprofil nicht erfüllen, von dem Knoten abgelehnt oder nicht empfangen, nicht durch eine Netzwerkapplikation an den Knoten gesendet, und/oder verworfen.

Weiter kann das Netzwerk einen oder mehrere Knoten, sogenannte Full Nodes, enthalten, welche alle Transaktionen innerhalb des Netzwerks empfangen und/oder speichern. Weiterhin kann das Netzwerk eine oder mehrere Knoten, sogenannte Light Nodes, enthalten welche alle Transaktionen empfangen, jedoch nur eine Prüfsumme oder einen Header einer Transaktion speichern.

Vorteilhaft werden in einem IoT-Netzwerk an Knoten nicht alle Transaktionen des Netzwerks empfangen und gegebenenfalls gespeichert, sondern es kann für spezifische Knoten durch ihr Kriterienprofil bestimmt sein, welche der Transaktionen an sie übertragen und/oder durch sie gespeichert werden. Insbesondere in einem Steuerungsnetzwerk eines technischen Systems, in welchem Transaktionen Steuerbefehle, welche durch das technische System ausgeführt werden sollen, oder Sensordaten des technischen Systems, oder im allgemeinen Daten, welche einen bestimmten Vorgang in dem technischen System beschreiben oder dokumentieren, enthalten, wird durch die offenbarten Techniken, die Datenlast an den Knoten des Netzwerks verringert. Besonders vorteilhaft wirkt sich dies aus, wenn die Transaktionen in einer Netzwerkapplikation oder in einer verteilten Datenbank, insbesondere eine Datenbank basierend auf einer Distributed Ledger Technologie, wie beispielsweise eine Blockchain, gespeichert werden. Beispielsweise ist denkbar, dass (einem Kriterienprofil) entsprechende Transaktionen getrennt von einer allgemeinen Datenreplizierung übermittelt, oder nicht an alle Knoten übermittelt, oder nicht von allen Knoten gespeichert werden. Entsprechende Transaktionen können in einigen Beispielen von einer allgemeinen Datenreplizierung ausgenommen sein, oder in die allgemeine Datenreplizierung eingeschlossen sein. In anderen Worten kann ein Protokoll, das zur Übertragung von entsprechenden Transaktionen verwendet wird, sich von einem Protokoll, das für eine allgemeine Datenreplizierung / -übertragung verwendet wird, unterscheiden.

Ein Verfahren für ein Netzwerkknoten umfasst die folgenden Schritte. Der Knoten umfasst ein Kriterienprofil des Knoten, welches ein oder mehrere Merkmale von Transaktionen parametrisiert, die innerhalb des Netzwerks an den Knoten übertragen werden sollen. Das Bereitstellen kann beispielsweise ein Aufweisen, Bereitstellen, Senden, Auslesen aus einem internen Speicher des Knoten, oder ein Erzeugen eines Kriterienprofils basierend auf einem internen oder externen Ereignisses bzw. Vorgangs enthalten. In einem weiteren Schritt empfängt der Knoten eine Transaktion, welche dem Kriterienprofil entspricht, in anderen Worten welche das Kriterienprofil erfüllen.

Eine Netzwerkapplikation eines Netzwerks sendet Transaktionen an eine Vielzahl von Knoten des Netzwerks. Die Transaktionen sind gekennzeichnet durch ein oder mehrere Merkmale. Die Netzwerkapplikation ist konfiguriert zum Empfangen eines Kriterienprofils von einem Knoten, welches ein oder mehrere Merkmale von Transaktionen parametrisiert, die an den Knoten übertragen werden sollen. Die Netzwerkapplikation ist weiter konfiguriert, um Transaktionen, welche das Kriterienprofil erfüllen, an den Knoten zu senden. Beispielsweise kann die Netzwerkapplikation konfiguriert sein, dass sie ausschließlich Transaktionen, welche das Kriterienprofil erfüllen, an den Knoten sendet. Die offenarten Techniken können beispielsweise auch für eine Kommunikation zwischen einer Teilmenge von Knoten des Netzwerks verwendet werden.

Bei einigen Beispielen kann das Netzwerk mehrere Knoten enthalten, welche jeweils ein Kriterienprofil umfassen. In diesen Fällen kann das Netzwerk derart konfiguriert sein, dass es an den jeweiligen Knoten ausschließlich Transaktionen sendet, welche seinem entsprechenden Kriterienprofil des Knoten entsprechen. Beispielsweise kann eine bestimmte Transaktion an einen, oder mehrere Knoten gesendet werden, abhängig davon, ob die Transaktion das Kriterienprofil der jeweiligen Knoten erfüllt. Das Netzwerk kann zudem weitere Knoten enthalten, die beispielsweise kein Kriterienprofil aufweisen, an welche die Netzwerkapplikation alle Transaktionen, unabhängig von den Merkmalen der Transaktionen, sendet.

Zu diesem Zweck kann die Netzwerkapplikation ein Repository, oder allgemein einen Speicher, aufweisen, und kann weiter konfiguriert sein, mehrere Kriterienprofile von mehreren Knoten zu empfangen und in dem Repository der Netzwerkapplikation zu speichern. Die Kriterienprofile in dem Repository können ausgelesen und verwendet werden, während eines Senden von Transaktionen durch die Netzwerkapplikation, insbesondere während eines Datenreplizierungsvorgangs, oder unabhängig von einem Datenreplizierungsvorgangs, einer verteilten Datenbank innerhalb des Netzwerkes, um Transaktionen entsprechend der Kriterienprofile an die jeweiligen Knoten zu senden.

Ein Verfahren für eine Netzwerkapplikation umfasst die folgenden Schritte. In einem Schritt empfängt die Netzwerkapplikation ein Kriterienprofil eines Knoten, welches ein oder mehrere Merkmale von Transaktionen umfasst, die an den Knoten übertragen werden sollen. In einem weiteren Schritt sendet die Netzwerkapplikation Transaktionen, welche durch ein oder mehrere Merkmale gekennzeichnet sind, die das Kriterienprofil des Knoten erfüllen, an den Knoten.

Der Erfindung liegt die Erkenntnis zugrunde, dass ein Knoten einer verteilten Datenbank oder einer Netzwerkapplikation nicht alle Transaktionen, welche innerhalb der verteilten Datenbank repliziert und gespeichert werden, sondern davon selektiv nur bestimmte Transaktionen basierend auf seinem Kriterienprofil, empfängt und/oder speichert.

Durch die erfindungsgemäßen Techniken kann somit ein Replikationsmechanismus von Transaktionen in dem Netzwerk zielgesteuert ausgestaltet werden, um eine performanzbeinflussende und ressourcenintensive Replikation auf allen Knoten zu vermeiden. Zudem braucht ein erfindungsgemäßer Knoten, ein sogenannter Target-Node, weniger Speicher als ein sogenannter Full-Node, da er nicht die gesamte Blockkette speichern muss. Je nach gewählter Implementierung wird dadurch die Übertragung und in bevorzugter Ausprägung auch Validierung von Transaktionen an einen Target-Node beschleunigt, da die entsprechenden Blöcke/Transaktionen bereits an den Target-Node übertragen und gegebenenfalls von einer Teilmenge an Knoten validiert werden können, selbst wenn die Replikation zwischen den Full-Nodes noch nicht abgeschlossen ist.

Ein Netzwerk, oder eine IoT-Infrastruktur, kann einen oder mehrere Knoten, und/oder einen oder mehrere Netzwerkapplikationen gemäß der vorliegenden Offenbarung umfassen.

Der Knoten und die Netzwerkapplikation können konfiguriert sein, um ein beliebiges Verfahren oder eine beliebige Kombination von Verfahren gemäß der vorliegenden Offenbarung durchzuführen.

Ein Computerprogramm umfasst Befehle, die bei der Ausführung des Programms durch einen Prozessor diesen veranlassen, die Schritte eines beliebigen Verfahrens gemäß der vorliegenden Offenbarung auszuführen.

Ein elektronisch lesbarer Datenträger umfasst Befehle, die bei der Ausführung durch einen Prozessor diesen veranlassen, die Schritte eines beliebigen Verfahrens gemäß der vorliegenden Offenbarung auszuführen.

Für ein solches Netzwerk, Computerprogramm und elektronisch lesbaren Datenträger können technische Effekte erzielt werden, die den technischen Effekten für die Verfahren gemäß der vorliegenden Offenbarung entsprechen.

Obwohl die in der obigen Zusammenfassung und der folgenden detaillierten Beschreibung beschriebenen Merkmale im Zusammenhang mit spezifischen Beispielen beschrieben werden, ist zu verstehen, dass die Merkmale nicht nur in den jeweiligen Kombinationen verwendet werden können, sondern auch isoliert oder in beliebigen Kombinationen verwendet werden können, und Merkmale aus verschiedenen Beispielen für die Verfahren, Netzwerkknoten und Netzwerkapplikationen, miteinander kombiniert werden können und miteinander korrelieren, sofern nicht ausdrücklich anders angegeben.

Die obige Zusammenfassung soll daher nur einen kurzen Überblick über einige Merkmale einiger Ausführungsformen und Implementierungen geben und ist nicht als Einschränkung zu verstehen. Andere Ausführungsformen können andere als die oben beschriebenen Merkmale umfassen.

### Kurze Beschreibung der Zeichnungen

Die Erfindung wird nachfolgend anhand bevorzugter Ausführungsbeispiele mit Bezug auf die beiliegenden Zeichnungen näher erläutert.

Dabei bezeichnen in den Figuren gleiche Bezugszeichen gleiche oder ähnliche Elemente. Die Figuren sind schematische Darstellungen verschiedener Ausführungsbeispiele der Erfindung, wobei die in den Figuren dargestellten Elemente nicht notwendigerweise maßstabsgetreu dargestellt sind. Vielmehr sind die verschiedenen in den Figuren dargestellten Elemente derart wiedergegeben, dass ihre Funktion und genereller Zweck für den Fachmann verständlich werden.
Figur 1 zeigt schematisch einen Knoten eines Netzwerks, gemäß Ausführungsbeispielen der Erfindung.
Figur 2 zeigt schematisch eine Netzwerkapplikation mit mehreren Knoten, gemäß Ausführungsbeispielen der Erfindung.
Figur 3 zeigt ein Flussdiagramm mit Schritten eines Knoten, gemäß Ausführungsbeispielen der Erfindung.
Figur 4 zeigt schematisch ein Flussdiagramm mit Schritten einer Netzwerkapplikation, gemäß Ausführungsbeispielen der Erfindung.

### Detaillierte Beschreibung

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, welche im Zusammenhang mit den Figuren näher erläutert werden.

Die Zeichnungen sind als schematische Darstellungen zu betrachten und die in den Zeichnungen dargestellten Elemente sind nicht unbedingt maßstabsgetreu dargestellt. Vielmehr werden die verschiedenen Elemente so dargestellt, dass ihre Funktion und ihr allgemeiner Zweck für einen Fachmann ersichtlich werden. Jede Verbindung oder Kopplung zwischen Funktionsblöcken, Geräten, Komponenten oder anderen physikalischen oder funktionellen Einheiten, die in den Zeichnungen oder hierin beschrieben sind, auch über eine drahtlose Verbindung und/oder eine indirekte Verbindung oder Kopplung realisiert werden. Funktionsblöcke können in Hardware, Firmware, Software oder einer Kombination davon implementiert werden.

Dabei ist zu beachten, dass die Beschreibung der Ausführungsbeispiele nicht im in einem beschränkenden Sinne zu verstehen ist. Der Umfang der Erfindung soll nicht durch die im Folgenden beschriebenen Ausführungsbeispielen oder durch die Figuren eingeschränkt werden, welche nur zur Veranschaulichung dienen.

Nachfolgend werden verschiedene Techniken für eine kanalbasierte Kommunikation eines IoT-Ökosystems, wie zum Beispiel eine Netzwerkapplikation, ein P2P Netzwerk, ein Cloudbasiertes Netzwerk, ein Distributed-Ledger-Technologie (DLT) -System, eine Blockchain, oder eine andere verteilte Datenbank oder dezentrales Netzwerk oder beliebige Kombination davon beschrieben.

Eine "verteilte Datenbank" kann eine Datenbank sein, die über eine Vielzahl von Berechnungsknoten verteilt ist, wobei Transaktionen an die Datenbank von einem Konsens zwischen den Netzwerkknoten abhängen und wobei die Netzwerkknoten geographisch über mehrere Standorte, Orte, Länder oder Organisationen verteilt sein können. Ein solcher Konsens kann durch einen Konsensusalgorithmus wie beispielsweise Proof-of-Work, Proof-of-Stake oder ein Abstimmungssystem hergestellt werden. Insbesondere kann die verteilte Datenbank als Blockkette (engl. blockchain) implementiert sein.

Unter einer Blockkette bzw. Blockchain wird im allgemeinen eine in der Regel verteilte Datenbank verstanden, deren Integrität (Sicherung gegen nachträgliche Manipulation) durch Speicherung des Einwegfunktionswertes, auch Hashwert genannt, des vorangehenden Datensatzes bzw. Blocks bzw. Glieds im jeweils nachfolgenden, also durch kryptographische Verkettung, gesichert ist. Der Schutz entsteht durch eine Mehrheit von vertrauenswürdigen Knoten in einem Blockchain-Netzwerk, welche ein sogenanntes Mining oder Validieren von Blöcken durchführt. Im Netz der an einer Blockchain teilnehmenden Knoten wird in regelmäßigen Abständen, beispielsweise alle 10 Minuten, ein neuer Block gebildet und dabei der Hashwert eines bestehenden Blockes mit hinterlegt. Einmal in der Kette auftauchende Transaktionen sind nicht mehr unbemerkt veränderbar.

Eine Konnektivität verschiedener Geräte in einer industriellen Umgebung mit dem Internet kann als sogenanntes IoT (Internet der Dinge) bezeichnet werden, welches als Überbegriff für ein Netzwerk heterogener Geräte - z.B. IoT-Geräte - verwendet wird, die miteinander interagieren und miteinander kommunikativ verbunden sind. So können Geräte und Systeme, die z.B. an industriellen Fertigungsprozessen oder Endprodukten eines solchen Herstellungsprozesses beteiligt sind, mit Cloud-Plattformen oder dem Internet oder einer IoT-Infrastruktur, im Allgemeinen einem Kommunikationsnetzwerk, verbunden sein und Daten austauschen, z.B. um einen Prozess zu steuern, ohne dass eine Interaktion von Mensch zu Mensch oder von Mensch zu Computer erforderlich ist.

Unter einem IoT-Netzwerk versteht man im Allgemeinen ein Netzwerk miteinander verbundener Dinge oder Geräte, die mit Sensoren, Software, Netzwerkkonnektivität und Elektronik ausgestattet sind, die es ihnen ermöglichen, Daten zu sammeln und auszutauschen. Ein IoT-Gerät kann ein beliebiges an ein Netzwerk anschließbares Gerät oder System mit Sensor- oder Steuerfunktionalität umfassen. Ein IoT-Gerät kann mit einem lokalen Netzwerk (LAN), einem Personal Area Network (PAN) und einem Wide Area Network (WAN) verbunden werden. Beispielsweise kann ein IoT-Gerät ein oder mehrere Funkgeräte enthalten, die mit einem oder mehreren Kommunikationsprotokollen arbeiten, die es dem IoT-Gerät ermöglichen, sich mit einem oder mehreren LANs oder PANs zu verbinden, wie z.B. WiFi, ZigBee, Bluetooth, Bluetooth Low Energy (BLE), Infrared Data Association, Transmission Control Protocol (TCP), User Datagram Protocol (UDP) und jedes andere geeignete Protokoll, das eine Verbindung zu einem LAN ermöglicht.

Eine Netzwerkapplikation (zum Beispiel P2P-Kommunikationssystem, Cloud, Distributed Ledger, Blockchain oder eine verteilte Datenbank) erlaubt die Implementierung eines verteilten IoT-Ökosystems mit verschiedenen Stakeholdern, die sich nicht zwangsläufig vertrauen. Mittels einer solchen Netzwerkapplikation ist es möglich eine P2P-Infrastruktur mit verschiedenen Stakeholdern zu realisieren, wobei ein Vertrauen selbst in einer nicht vertrauenswürdigen Umgebung durch technische Maßnahmen realisiert werden kann.

Die Technologie von Blockketten (engl. Blockchains) bzw. "Distributed Ledger" ist aktuell eine intensiv diskutierte Technologie, die insbesondere als verteiltes Datenbanksystem oder als Netzwerkapplikation realisiert sein kann. Neben Anwendungen für dezentrale Bezahlsysteme (z. B. Bit-Coin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, beispielsweise eine zentrale Instanz, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonfigurieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollten die Begriffe "Computer", Knoten, oder Netzwerkknoten oder IoT-Gerät möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, IoT-Geräte Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einem Speicher, einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen des entsprechenden Moduls ausführt oder um das erfindungsgemäße Verfahren oder einen Schritt des erfindungsgemäßen Verfahrens zu implementieren oder zu realisieren. Es kann beispielsweise ein Prozessor derart ausgebildet sein, dass dieser die Funktionen von mehreren Modulen realisiert.

Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden.

Mittels der Speichereinheit können Daten beispielsweise rechnergestützt und/oder automatisiert gespeichert, abgerufen oder bereitgestellt werden.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) oder der Netzwerkapplikation verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems (oder der Netzwerkapplikation) oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten(einheiten) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems (oder der Netzwerkapplikation) prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks, für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems (oder der Netzwerkapplikation) den vorhergehenden Datenblock des verteilten Datenbanksystems (oder der Netzwerkapplikation) angibt bzw. referenziert (in der Fachliteratur insbesondere häufig als "previous block hash" bezeichnet). Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems oder der Netzwerkapplikation) verwendet werden, um einen neuen Datenblock mit einem (vorhandenen) Datenblock des verteilten Datenbanksystems (oder der Netzwerkapplikation) zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems (oder der Netzwerkapplikation) umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen bezieht. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann (um z. B. im ungeschützten Teil noch personenbezogene Daten zu speichern). Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transaktion eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems (oder der Netzwerkapplikation) sein, eine Transaktionsprüfsumme eines Datenblocks mit den entsprechenden Daten (des verteilten Datenbanksystems oder der Netzwerkapplikation oder einer anderen Datenbank) oder eine Datenprüfsumme, die über die Daten gebildet wurde.

Zusätzlich kann die entsprechende Transaktion noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank oder einer anderen Netzwerkapplikation, welche die Daten umfasst) umfassen. Die entsprechenden Daten könnten dann beispielsweise auch in einer weiteren Transaktion eines weiteren Datenblocks des verteilten Datenbanksystems oder der Netzwerkapplikation bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in den entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems oder der Netzwerkapplikation möglichst gering zu halten.

Unter "Verketten der/von Datenblöcken eines verteilten Datenbanksystems oder einer Netzwerkapplikation" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems (oder der Netzwerkapplikation) verweisen bzw. diese referenzieren.

Unter "Einfügen in das verteilte Datenbanksystem oder die Netzwerkapplikation" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems oder einer Netzwerkapplikation übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems oder der Netzwerkapplikation verkettet. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, ein Blockketten-Orakel oder eine Blockketten-Plattform) erfolgen. Insbesondere kann dabei unter einer Blockketten-Plattform eine Blockkette als Dienst (engl. Blockchain as a Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems (oder der Netzwerkapplikation) verkettet hat.

Unter "Transaktion" bzw. "Transaktionen" können im Zusammenhang mit der Erfindung beispielsweise ein Smart-Contract, eine Datenstruktur oder ein Transaktionsdatensatz verstanden werden, der insbesondere jeweils eine der Transaktionen oder mehrere Transkationen umfasst. Beispielsweise kann auch eine entsprechende Transaktion einen Smart-Contract umfassen. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktionen und/oder eine Bestätigungstransaktion mit einer Bestätigungsnachricht und/oder eine Ausführungsbestätigungstransaktion mit einer Ausführungsbestätigungsnachricht verstanden werden. Eine Ausführungsbestätigungsnachricht kann beispielsweise eine Bestätigung für eine Ausführung der Steuerbefehle der Steuertransaktion durch eines der Geräte umfassen, wenn ein entsprechendes Gerät der Geräte die Steuerbefehle der Steuertransaktion erfolgreich ausgeführt hat. Hierzu kann die Ausführungsbestätigungsnachricht beispielsweise eine von dem entsprechenden Gerät erzeugte Prüfsumme (z. B. eine Transaktionsprüfsumme) über die ausgeführten Steuerbefehle umfassen und/oder eine Bestätigung der Ausführung umfassen, die z. B. von der Prüfsumme ebenfalls geschützt ist. Eine Ausführungsbestätigungsnachricht kann beispielsweise auch in dem verteilten Datenbanksystem oder der Netzwerkapplikation gespeichert werden, wenn das Gerät die Steuerbefehle teilweise ausführt und/oder die Ausführung der Steuerbefehle unterbrochen wird. Dies kann z. B. der Fall sein, wenn während der Ausführung der Steuerbefehle ein Defekt an dem Gerät aufgetreten ist, der die Ausführung der Steuerbefehle nicht mehr erlaubt (z. B. trat ein Defekt an einem Aktor oder Werkzeug auf). Beispielsweise kann ein anderes Gerät, das beispielsweise die Ausführungsanforderungen für die verbleibenden unausgeführten Steuerbefehle erfüllt, dann anhand der Ausführungsbestätigungsnachricht diese unausgeführten Steuerbefehle der entsprechenden Steuertransaktion ausführen. Entsprechend kann die Ausführungsbestätigungsnachricht beispielsweise den Grad der Ausführung bzw. eine Angabe über den ausgeführten Teil der Steuerbefehle umfassen. Alternativ oder zusätzlich kann eine Ausführungsbestätigungsnachricht die Steuerbefehle angeben, die für eine erfolgreiche Ausführung der Steuerbefehle einer entsprechenden Steuertransaktion noch ausgeführt werden müssen. Entsprechend kann beispielsweise eine Ausführungsbestätigungsnachricht einen Datensatz umfassen, der angibt, welche der Steuerbefehle noch auszuführen sind bzw. der angibt, welche der Steuerbefehle für die erfolgreiche Ausführung der Steuerbefehle einer entsprechenden Steuertransaktion fehlen. Hierdurch wird beispielsweise ermöglicht, dass eine Weiterverarbeitung der Steuerbefehle erfolgen kann, selbst wenn die Ausführung der Steuerbefehle bei einem Gerät unterbrochen wurde. Entsprechend kann beispielsweise in den Ausführungsanforderungen gefordert sein, dass mehr als ein Gerät (z. B. zwei oder drei Geräte oder mehr Geräte) die Ausführungsanforderungen erfüllt, damit eine Ausführung der Steuerbefehle auch garantiert ist, selbst wenn z. B. ein Gerät während der Ausführung der Steuerbefehle einer entsprechenden Steuertransaktion ausfällt.

Alternativ kann eine Transaktion beispielsweise eine Datenstruktur sein, die Daten speichert (z. B. die Steuerbefehle). Eine Transaktion kann beispielsweise auch als Nachricht (also eine Kommunikationsnachricht, welche Daten speichert) bezeichnet werden bzw. eine Nachricht sein, die z. B. entsprechende Daten (z. B. Steuerbefehle) speichert. Mit der Erfindung können somit entsprechende Transaktionen oder Nachrichten ausgetauscht werden. Transaktionen können dabei z. B. die Steuerbefehle und/oder Vertragsdaten und/oder andere Daten wie Videodaten, Nutzerdaten, Messdaten etc. umfassen.

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems oder der Netzwerkapplikation) oder die entsprechende Transaktion des verteilten Datenbanksystems oder der Netzwerkapplikation) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem oder die Netzwerkapplikation" erläutert ist.

Unter einem "Programmcode" (z. B. ein Smart-Contract oder Chain-Code) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem oder die Netzwerkapplikation ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems oder der Netzwerkapplikation ausgeführt. Dabei wird beispielsweise eine virtuelle Maschine durch die Infrastruktur des verteilten Datenbanksystems (oder der Netzwerkapplikation) realisiert.

Unter einem "Smart Contract" kann im Zusammenhang mit der Erfindung beispielsweise ein ausführbarer Programmcode verstanden werden (siehe insbesondere Definition "Programmcode"). Der Smart Contract ist vorzugsweise in einer Transaktion eines verteilten Datenbanksystems oder der Netzwerkapplikation (z. B. eine Blockkette) gespeichert, beispielsweise in einem Datenblock des verteilten Datenbanksystems (oder der Netzwerkapplikation). Beispielsweise kann der Smart Contract auf die gleiche Weise ausgeführt werden, wie dies bei der Definition von "Programmcode", insbesondere im Zusammenhang mit der Erfindung, erläutert ist.

Unter "Smart-Contract-Prozess" kann im Zusammenhang mit der Erfindung insbesondere ein Ausführen eines Programmcodes (z. B. der Steuerbefehle) in einem Prozess durch das verteilte Datenbanksystem oder durch die Netzwerkapplikation verstanden werden, wobei beispielsweise die entsprechende Infrastruktur des verteilten Datenbanksystems oder der Netzwerkapplikation den Programmcode ausführt.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt oder Inhalt einer bestimmten Transaktion zu lösen ist. Eine solche rechenintensive Aufgabe wird beispielsweise auch als kryptographisches Puzzle bezeichnet.

Unter einer "Netzwerkapplikation", kann im Zusammenhang mit der Erfindung beispielsweise eine dezentral verteilte Datenbank, ein verteiltes Datenbanksystem, eine verteilte Datenbank, eine Peer-to-Peer Applikation, ein verteiltes Speicherverwaltungssystem, eine Blockkette (engl. Blockchain), ein Distributed Ledger, ein verteiltes Speichersystem, ein Distributed Ledger Technology (DLT) basiertes System (DLTS), ein revisionssicheres Datenbanksystem, eine Cloud, ein Cloud-Service, eine Blockkette in einer Cloud oder eine Peer-to-Peer Datenbank verstanden werden. Beispielsweise kann eine Netzwerkapplikation (oder auch als Netzwerkapplikation bezeichnet) ein verteiltes Datenbanksystem sein, das z. B. mittels einer Blockkette oder einem Distributed Ledger realisiert ist. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder einer Kombination aus den genannten Implementierungsvarianten umgesetzt ist. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting). Wird beispielsweise eine Blockkette verwendet, so kann diese insbesondere mittels einer Bitcoin-basierten Realisierung oder einer Ethereumbasierten Realisierung umgesetzt werden. Unter einem "verteilten Datenbanksystem" oder einer "Netzwerkapplikation" kann beispielsweise auch ein verteiltes Datenbanksystem oder eine Netzwerkapplikation verstanden werden, von dem/der zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen über gerichtete Kanten miteinander verbunden. Azyklisch bedeutet dabei insbesondere, dass es keine gerichteten Schleifen im Graphen gibt.

Bei dem verteilten Datenbanksystem oder bei der Netzwerkapplikation kann es sich beispielsweise um ein öffentliches verteiltes Datenbanksystem oder eine öffentliche Netzwerkapplikation (z. B. eine öffentliche Blockkette) oder ein geschlossenes (oder privates) verteiltes Datenbanksystem oder eine geschlossene Netzwerkapplikation (z. B. eine private Blockkette) handeln.

Handelt es sich beispielsweise um ein öffentliches verteiltes Datenbanksystem oder eine öffentliche Netzwerkapplikation, bedeutet dies, dass neue Knoten und/oder Geräte ohne Berechtigungsnachweise oder ohne Authentifizierung oder ohne Anmeldeinformationen oder ohne Credentials dem verteilten Datenbanksystem oder der Netzwerkapplikation beitreten können bzw. von diesem akzeptiert werden. Insbesondere können in einem solchen Fall die Betreiber der Knoten und/oder Geräte anonym bleiben.

Handelt es sich bei dem verteilten Datenbanksystem oder der Netzwerkapplikation beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem oder der Netzwerkapplikation beitreten zu können bzw. von diesem akzeptiert zu werden.

Bei einem verteilten Datenbanksystem oder bei der Netzwerkapplikation kann es sich beispielsweise auch um ein verteiltes Kommunikationssystem zum Datenaustausch handeln. Dies kann beispielsweise ein Netzwerk oder ein Peer-to-Peer Netzwerk sein.

Bei einem/dem verteilten Datenbanksystem kann es sich beispielsweise auch um ein dezentrales verteiltes Datenbanksystem und/oder ein dezentrales verteiltes Kommunikationssystem handeln.

Bei einer "Netzwerkapplikation" kann es sich beispielsweise auch um eine Netzwerkapplikationsinfrastruktur handeln oder die Netzwerkapplikation umfasst eine entsprechende Netzwerkapplikationsinfrastruktur. Diese Infrastruktur kann beispielsweise Knoten und/oder Kommunikationsnetze und/oder Datenschnittstellen und/oder weitere Komponenten umfassen, um die Netzwerkapplikation zu realisieren oder auszuführen. Bei der Netzwerkapplikation kann es sich z. B. um eine verteilte Netzwerkapplikation (z. B. eine verteilte Peer-to-Peer Applikation oder ein verteiltes Datenbanksystem) handeln, die beispielsweise auf mehreren Knoten der Netzwerkapplikationsinfrastruktur ausgeführt wird.

Unter Dateneinheit oder "Datenblock" der insbesondere je nach Kontext und Realisierung auch als "Glied" oder "Block" bezeichnet sein kann, kann im Zusammenhang mit der Erfindung beispielsweise ein Datenblock eines verteilten Datenbanksystems oder einer Netzwerkapplikation (z. B. eine Blockkette oder eine Peer-to-Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Blockheader), einen Transaktionszähler und eine oder mehrere Transaktionen umfassen. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen. Bei einem Datenblock kann es sich beispielsweise auch nur um einen bestimmten Speicherbereich oder Adressbereich der Gesamtdaten handeln, die in dem verteilten Datenbanksystem oder der Netzwerkapplikation gespeichert sind. Damit lassen sich beispielsweise blocklose (engl. blockless) verteilte Datenbanksysteme oder Netzwerkapplikationen, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems oder der Netzwerkapplikation) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem oder der Netzwerkapplikation in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht. Beispielsweise können zusätzlich zu einer Prüfsumme über die Transaktionen auch eine Prüfsumme über den "State", d. h. die Zustände der Smart-Contracts und/oder der Konten und/oder über die Rückgabewerte der Transaktionen (engl. Transaction Receipts) z. B. in die Transaktion und/oder den Datenblock eingefügt werden.

Unter "Nonce" kann im Zusammenhang mit der Erfindung beispielsweise eine kryptographische Nonce verstanden werden (Abkürzung für: "used only once" oder "number used once"). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems oder der Netzwerkapplikation" kann im Zusammenhang mit der Erfindung beispielsweise der Datenblock des verteilten Datenbanksystems oder der Netzwerkapplikation verstanden werden, der insbesondere einem (bestimmten) Datenblock direkt vorhergeht. Alternativ können unter "vorhergehender Datenblöcke eines (bestimmten) Datenblockes des verteilten Datenbanksystems oder der Netzwerkapplikation" insbesondere auch alle Datenblöcke des verteilten Datenbanksystems oder der Netzwerkapplikation verstanden werden, die dem bestimmten Datenblock vorhergehen. Hierdurch kann beispielsweise die Verkettungsprüfsumme oder die Transaktionsprüfsumme insbesondere nur über den dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems der der Netzwerkapplikation" und dergleichen, können im Zusammenhang mit der Erfindung beispielsweise Geräte (z. B. Feldgeräte, Mobiltelefone), Rechner, Smartphones, Clients oder Teilnehmer verstanden werden, die Operationen (mit) dem verteilten Datenbanksystem oder der Netzwerkapplikation (z. B. eine Blockkette) durchführen. Solche Knoten können beispielsweise Transaktionen eines verteilten Datenbanksystems oder einer Netzwerkapplikation bzw. deren Datenblöcke ausführen oder neue Datenblöcke mit neuen Transaktionen in das verteilte Datenbanksystem oder die Netzwerkapplikation mittels neuer Datenblöcke einfügen bzw. verketten. Insbesondere kann dieses Validieren und/oder Verketten durch einen vertrauenswürdigen Knoten (z. B. einen Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem oder der Netzwerkapplikation, eine Knotenprüfsumme (z. B. eine digitale Signatur oder ein Zertifikat) in dem neuen Datenblock speichern. Bei der Knotenprüfsumme kann es sich dabei beispielsweise um eine von einem entsprechenden Knoten signierte Prüfsumme z. B. eines Datenblocks oder einer Transaktion handeln. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder einer industriellen Anlage und/oder eines Automatisierungsnetzes und/oder einer Fertigungsanlage, die insbesondere auch ein Knoten des verteilten Datenbanksystems oder der Netzwerkapplikation sind. Dabei können die Geräte beispielsweise Feldgeräte sein oder Geräte im Internet der Dinge sein, die insbesondere auch ein Knoten des verteilten Datenbanksystems oder der Netzwerkapplikation sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise über Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Bloccketten-Orakels löscht). Das Sicherheitsmodul kann dabei beispielsweise kryptographische Schlüssel umfassen, die z. B. für die Signatur der Transaktion und/oder für die Berechnung der Prüfsummen (z. B. Transaktionsprüfsummen oder Knotenprüfsummen) notwendig sind.

Unter einem "Rechner" oder einem "Gerät" kann im Zusammenhang mit der Erfindung beispielsweise ein Computer(system), ein Client, ein Smartphone, ein Server, die jeweils außerhalb der Blockkette angeordnet sind bzw. kein Teilnehmer des verteilten Datenbanksystems oder der Netzwerkapplikation (z. B. der Blockkette) sind (also keine Operationen mit dem verteilten Datenbanksystem oder der Netzwerkapplikation durchführen oder diese nur abfragen, ohne jedoch Transaktionen durchzuführen, Datenblöcke einzufügen oder Proof-of-Work-Nachweise zu berechnen), verstanden werden. Alternativ kann insbesondere auch unter einem Rechner ein Knoten des verteilten Datenbanksystems oder der Netzwerkapplikation verstanden werden. Mit anderen Worten kann insbesondere unter einem Gerät ein Knoten des verteilten Datenbanksystems oder der Netzwerkapplikation verstanden werden oder auch ein Gerät außerhalb der Blockkette bzw. des verteilten Datenbanksystems oder der Netzwerkapplikation verstanden werden. Ein Gerät außerhalb des verteilten Datenbanksystems oder der Netzwerkapplikation kann beispielsweise auf die Daten (z. B. Transaktionen oder Steuertransaktionen) des verteilten Datenbanksystems oder der Netzwerkapplikation zugreifen und/oder von Knoten (z. B. mittels Smart-Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems oder der Netzwerkapplikation) durch einen Knoten realisiert, kann dies z. B. mittels eines Smart-Contracts erfolgen, der insbesondere in einer Transaktion des verteilten Datenbanksystems oder der Netzwerkapplikation gespeichert ist. Ein Rechner oder ein Gerät kann beispielsweise auch ein Teil der Infrastruktur sein, die z. B. die Netzwerkapplikation oder das verteilte Datenbanksystem ausführt, realisiert oder umfasst.

Unter "Steuerbefehle" oder "Steuertransaktionen" können im Zusammenhang mit der Erfindung beispielsweise ein Smart-Contract oder ausführbarer Programmcode verstanden werden, der insbesondere durch die Netzwerkapplikation oder das verteilte Datenbanksystem oder durch entsprechende Geräte ausgeführt wird, wobei beispielsweise das verteilte Datenbanksystem bzw. dessen Knoten und Infrastruktur die entsprechenden Steuerbefehle abarbeitet bzw. umsetzt. Insbesondere ergeben mehrere Steuerbefehle oder Steuertransaktionen aus einem oder mehreren Datenblöcken eine Befehlsfolge. Mittels der Steuerbefehle werden insbesondere eine Fertigungsanlage mit den zugehörigen Fertigungsmaschinen (z. B. Geräte) gesteuert, die Geräte eines Automatisierungsnetzes gesteuert oder die Geräte eines Energieversorgungsnetzes gesteuert oder Geräte im Internet der Dinge gesteuert. Insbesondere sind in den Steuerbefehlen oder Steuertransaktionen (also auch in den Befehlsfolgen) die Fertigungsanweisungen oder Fertigungsschritte für ein Produkt und dessen Herstellung kodiert. Mit den Steuerbefehlen oder Steuertransaktionen werden beispielsweise Geräte gesteuert, indem beispielsweise ein Gerät die entsprechenden Steuerbefehle ausführt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage und/oder Geräte im Internet der Dinge, die insbesondere auch ein Knoten des verteilten Datenbanksystems sind. Dabei können die Geräte beispielsweise Feldgeräte sein, die insbesondere auch ein Knoten des verteilten Datenbanksystems sind. Die Geräte können beispielsweise auch Bankautomaten sein, wobei die Steuerbefehle eine Geldauszahlung veranlassen. Beispielsweise können die Steuerbefehle aus einer Befehlsfolge abgeleitet werden bzw. aus diesen bestimmt werden. Beispielsweise kann eine Steuertransaktion einen oder mehrere Steuerbefehle umfassen. Beispielsweise kodieren die Steuerbefehle mechanische Bewegung und/oder andere physikalische Größen (z. B. Druck oder Temperatur), die von einem entsprechenden Gerät/Knoten (z. B. durch einen entsprechenden Aktor) in die entsprechende mechanische Bewegung und/oder die entsprechende andere physikalische Größen umgesetzt werden. Mit den Steuerbefehlen werden dann beispielsweise Aktoren der Geräte und/oder Knoten gesteuert. Entsprechend umfasst ein entsprechendes Gerät/Knoten beispielsweise einen Aktor. Ist ein Gerät/Knoten beispielsweise ein Roboter, so würde ein Aktor auch als Effektor bezeichnet werden. Bei einem Gerät kann es sich beispielsweise auch um ein mechatronisches Gerät oder System handeln, wobei ein mechatronisches Gerät/System beispielsweise ein Aktor und/oder ein lineartechnisches Gerät ist. Ein lineartechnisches Gerät ist beispielsweise ein Gerät zur Ausführung translativer Bewegungen. Bei einem entsprechenden Gerät kann es sich beispielsweise auch um ein Antriebssystem handeln. Mittels der Steuerbefehle und der Geräte und/oder Knoten kann beispielsweise auch ein Regelkreis geregelt und/oder gesteuert werden, indem beispielsweise die Ausführungsbestätigungsnachrichten für ausgeführte Steuerbefehle durch die Vorrichtung oder durch die Netzwerkapplikation ausgewertet werden und entsprechende Steuerbefehle als Reaktion auf die Ausführungsbestätigungsnachrichten erzeugt werden. Für diese neuen Steuerbefehle werden dann beispielsweise wieder entsprechende Ausführungsanforderungen bestimmt oder abgerufen und diese werden dann beispielsweise wieder Steuertransaktionen zugeordnet, damit diese beispielsweise - wie in der Erfindung beschrieben - von den entsprechenden Geräten für die Ausführung der Steuerbefehle berücksichtigt werden. Bei den Steuerbefehlen kann es sich beispielsweise auch um Steuerbefehle zum Steuern von kryptographischen Geräten und/oder Verfahren handeln (z. B. eine Nutzerauthentisierung oder Nutzerauthentifizierung).

Unter Steuerbefehlen können beispielsweise auch Befehlsfolgen oder auch Transaktionen aus einer Datenbank bzw. eines Datenbanksystems verstanden werden, die durch Geräte oder Knoten des verteilten Datenbanksystems ausgeführt werden sollen. Bei dem Datenbanksystem kann es sich beispielsweise um das verteilte Datenbanksystem handeln, wenn es z. B. Transaktionen gibt, denen noch keine Ausführungsanforderungen zugewiesen bzw. zugeordnet wurden. Alternativ oder zusätzlich kann das Datenbanksystem eine andere Datenbank sein, z. B. eine konventionelle hierarchische Datenbank, von der die entsprechenden Transaktionen abgerufen werden können. Unter Steuerbefehle können beispielsweise auch Befehlsfolgen oder auch Transaktionen verstanden werden, die durch ein Eingabesystem bereitgestellt werden und die von dem verteilten Datenbanksystem oder der Netzwerkapplikation ausgeführt werden sollen. Unter Steuerbefehlen können beispielsweise Befehlsfolgen oder Steuerbefehle verstanden werden, mit denen mechanische und/oder elektrische und/oder elektromechanische und/oder elektronische Geräte gesteuert werden.

Unter Validierungsanforderungen oder "Geräteanforderungen", in anderen Worten Anforderungen, können im Zusammenhang mit der Erfindung beispielsweise Eigenschaften verstanden werden, die ein Gerät für eine Ausführung der Steuertransaktion oder der Steuerbefehle einhalten muss. Mittels der Geräteanforderungen kann beispielsweise ein bestimmtes vorgegebenes Gerät sein, das z. B. die Steuerbefehle bzw. die Steuertransaktion ausführen sollen. Mit anderen Worten werden beispielsweise durch die Geräteanforderungen Vorgeben festgelegt, die ein Gerät, das die Steuerbefehle ausführen soll, erfüllen muss. Die Geräteanforderungen werden dabei z. B. anhand von Geräteeigenschaften eines entsprechenden Gerätes überprüft. Die Geräteanforderungen legen z. B. durch einen eindeutigen Identifizierer fest, welche Geräte die vorgegebenen Steuerungsaktionen durchführen können bzw. sollen (z. B. ein Fertigungsroboter, der Metallteile verschweißen kann; ein Lackierroboter, der vorgegebene Farben auf ein Fertigungsteil auftragen kann; Geräte, die in einem Umspannwerk elektrische Verbindungen automatisiert herstellen). Es kann z. B. auch ein Gerät vorgegeben sein, das die Fertigungsschritte bzw. Steuerbefehle mit einer vorgegebenen Präzision und/oder Geschwindigkeit ausführt (z. B. Drehbänke, Fräsen und Schneidemaschinen). Alternativ oder zusätzlich können "Geräteanforderungen" auch bestimmte Geräteklassen voraussetzen, die für eine Ausführung oder Abarbeitung der Steuerbefehle vorgegeben werden. Insbesondere wird dabei unter einer Geräteklasse ein oder mehrere Geräte (z. B. Schleifgeräte oder Sägegeräte) verstanden, die beispielsweise in der Lage sind, bestimmte vorgegebene Aktionen auszuführen (z. B. ein bestimmtes Material schleifen oder sägen). Insbesondere sind die Geräteanforderungen (die auch als gerätespezifischen Anforderungen bezeichnet werden können) die Anforderungen, die zum Ausführen der Steuerbefehle an die entsprechenden Geräte und/oder Knoten gestellt werden. Die Geräteeigenschaften (die auch als gerätespezifische Daten bezeichnet werden können) entsprechen dann beispielsweise den tatsächlichen und/oder aktuellen Geräteeigenschaften eines Gerätes. Beispielsweise wird überprüft, ob ein Gerät bzw. eine Fertigungsmaschine in der Lage ist, die Steuerbefehle mit der vorgegebenen Präzision, die z. B. in den gerätespezifischen Anforderungen vorgegeben sind, auszuführen. Insbesondere können gerätespezifische Anforderungen auch als maschinelle und/oder mechatronische und/oder fertigungsspezifische Anforderungen bezeichnet werden. Insbesondere können gerätespezifische Daten oder Geräteeigenschaften auch als maschinelle und/oder mechatronische und/oder fertigungsspezifische Daten oder Geräteeigenschaften bezeichnet werden. Insbesondere können gerätespezifische Daten oder Geräteeigenschaften auch als Geräteinformationen bezeichnet werden. Insbesondere geben die Geräteanforderungen die Anforderungen vor, die durch die gerätespezifischen Daten eines Gerätes erfüllt sein sollen. Mit anderen Worten geben die Geräteanforderungen einen "Soll"-Wert vor, der mit dem "Ist"-Wert von den Geräten abgeglichen wird. Die gerätespezifischen Daten stellen dabei insbesondere die aktuellen Geräteeigenschaften dar. Diese Geräteeigenschaften bzw. gerätespezifischen Daten umfassen beispielsweise die UID eines Gerätes bzw. eines Systems, verfügbare Werkzeuge oder unterstützte Fertigungsverfahren (fräsen, schleifen oder 3D-drucken), Fertigungspräzision, Fertigungskosten, Standort der Geräte, Netzwerkadresse zum Ansprechen/Ansteuern des Gerätes, berechtigte Nutzer usw.

Die Validierungsanforderungen können beispielsweise auch Sicherheitsanforderungen oder ortsbezogene Anforderungen (z. B. eine Länderangabe, eine GPS-Angabe oder Postleitzahl (PLZ)) sein oder diese umfassen, die ein Gerät für die Ausführung der Steuerbefehle erfüllen soll. Beispielsweise kann gefordert sein, dass das Gerät vorgegebene Sicherheitseinrichtungen aufweisen soll oder für die Ausführung der Steuerbefehle am Gerät noch eine bestimmte oder eine vorgegebene Authentisierung und/oder Authentifizierung notwendig ist. Dies kann beispielsweise der Fall sein, wenn jemand an einem Gerät (z. B. einem Geldautomaten) sich Bargeld auszahlen lassen möchte. Die Steuerbefehle sind dann beispielsweise die Anforderung des Kunden eine Geldauszahlung vorzunehmen. Hat beispielsweise ein entsprechender Kunde konfiguriert, dass er z. B. nur in vorgegebenen Ländern, z. B. Italien, Frankreich und Österreich, eine Bargeldauszahlung erlaubt, so wird dies in den gerätespezifischen Anforderungen (und insbesondere ggf. implizit in den Ausführungsanforderungen ebenfalls) gespeichert. Ein Geldautomat in Andorra würde dann ggf. keine Auszahlung erlauben bzw. diese unterbinden. Alternativ kann dies z. B. auch durch einen anderen Knoten des verteilten Datenbanksystems unterbunden werden oder durch einen Smart-Contract des verteilten Datenbanksystems unterbunden werden. Auch kann beispielsweise durch die Sicherheitsanforderungen eine spezifische Authentifizierung des Kunden gefordert sein. Beispielsweise, dass ein Pin für ein Auszahlung eingegeben wird (was z. B. in den USA nicht zwangsläufig der Fall ist) und/oder eine bestimmte Pin-Länge gefordert ist (z. B. 8 Zeichen) und/oder, dass andere zusätzliche Authentisierungsverfahren gefordert sind (z. B. 2 Faktor-Authentisierung, Mobile-Tan, Google Authenticator).

Alternativ kann das Bestimmungsmodul die Steuerbefehle auch weiter analysieren und, wenn beispielsweise das Bestimmungsmodul bereits feststellt, dass die Geräteanforderungen nicht erfüllt sind oder nicht erfüllbar sind, eine Steuertransaktion erstellen, die das entsprechende Gerät oder das System oder die Netzwerkapplikation darauf hinweist und ggf. eine Ausführung der Steuerbefehle unterbindet. Alternativ kann beispielsweise auch keine Steuertransaktion erzeugt werden und es gibt irgendwann einen Timeout für die Ausführung der Steuerbefehle, z. B. nach einem vorgegebenen Zeitraum, der vorzugsweise konfigurierbar ist.

Unter "systemspezifischen Daten" oder "gerätespezifische Daten" oder "Geräteeigenschaften" können im Zusammenhang mit der Erfindung beispielsweise auch Systemeigenschaften oder Geräteeigenschaften eines Gerätes oder eines technischen Systems verstanden werden. Die gerätespezifischen Daten oder systemspezifischen Daten oder Geräteeigenschaften sind beispielsweise aktuelle Geräteeigenschaften oder Systemeigenschaften. Die gerätespezifischen Daten oder systemspezifischen Daten (bzw. die entsprechenden Eigenschaften) können beispielsweise für ein technisches System, die Geräte eines technischen Systems oder ein Gerät folgende Daten umfassen: die UID des Gerätes bzw. des Systems, verfügbare Werkzeuge oder unterstützte Fertigungsverfahren (fräsen, schleifen oder 3D-drucken) des Gerätes bzw. des Systems, Fertigungspräzision des Gerätes bzw. des Systems, Fertigungskosten des Gerätes bzw. des Systems, Standort des Gerätes bzw. des Systems, Netzwerkadresse zum Ansprechen/Ansteuern des Gerätes bzw. des Systems, berechtigte Nutzer für das Gerät oder das System, Namen des Gerätes bzw. des Systems, usw.

Je nach gewählter Implementierung können beispielsweise die systemspezifischen Daten übergreifend für ein Gerät oder mehrere Geräte eines technischen Systems realisiert sein, indem z. B. über eine UID/(Netzwerk-)Adresse des technischen Systems auch die entsprechenden Geräte des technischen Systems adressiert, identifiziert oder mit diesen kommuniziert werden können. Alternativ oder zusätzlich können beispielsweise die gerätespezifischen Daten für das eine Gerät oder die mehreren Geräte des technischen Systems in den systemspezifischen Daten umfasst sein.

Unter einem "technischen System" können im Zusammenhang mit der Erfindung beispielsweise ein Gerät oder mehrere Geräte verstanden werden, die kommunikativ miteinander und/oder mit einem verteilten Datenbanksystem (z. B. das erste verteilte Datenbanksystem) und/oder mit der Netzwerkapplikation verbunden sind, beispielsweise eine maschinelle Anlage oder eine Produktionsanlage.

Unter "vorausgesetzte Steuerbefehle" können im Zusammenhang mit der Erfindung beispielsweise Steuerbefehle verstanden werden, die insbesondere durch andere Knoten (des verteilten Datenbanksystems) und/oder durch eines oder mehrere der Geräte bereits ausgeführt sein müssen, bevor die entsprechenden Steuerbefehle ausgeführt werden können. Insbesondere sind für diese vorausgeführten Steuerbefehle entsprechende Ausführungsbestätigungsnachrichten in dem verteilten Datenbanksystem oder der Netzwerkapplikation gespeichert (z. B. in Datenblöcken des verteilten Datenbanksystems), wenn z. B. die vorausgeführten Steuerbefehle durch Geräte oder Knoten erfolgreich ausgeführt wurden. Insbesondere werden bei diesen vorausgeführten oder vorausgesetzten Steuerbefehlen auch die diesen vorausgeführten Steuerbefehlen zugeordneten Geräteanforderungen mit überprüft bzw. mitberücksichtigt. Mittels der Ausführungsanforderungen wird insbesondere sichergestellt, dass beispielsweise eine Reihenfolge der Fertigungsschritte beim Erstellen eines Produktes eingehalten wird. Es wird damit beispielsweise erreicht, dass die Fertigungsreihenfolge in sinnvoller Weise eingehalten wird. Es wird z. B. verhindert, dass ein Fertigungsschritt durch einen anderen zerstört wird, nur weil die Fertigungsreihenfolge nicht eingehalten wurde. Auf ähnliche Weise kann insbesondere auch eine Steuerung von einem Energieversorgungsnetz gesteuert werden, indem z. B. Transformatoren oder Spannungskoppler in der richtigen Reihenfolge eingeschaltet oder mit dem Energieversorgungsnetz verbunden werden. Werden beispielsweise für das Ausführen von Steuerbefehlen bzw. Steuertransaktionen keine vorausgesetzten Steuerbefehle benötigt, können die vorausgesetzten Steuerbefehle leer sein. Beispielsweise können diese mit einer Null belegt sein, einem Leerstring belegt sein oder einem Wert, der angibt, dass keine vorausgesetzten Steuerbefehle notwendig sind. Alternativ können beispielsweise einem Teil der Steuerbefehle keine Ausführungsanforderung zugeordnet sein, wobei insbesondere zumindest einem der Steuerbefehle zumindest eine Ausführungsanforderung zugeordnet ist. Beispielsweise handelt es sich bei den vorausgesetzten Steuerbefehlen um Steuerbefehle, die z. B. von einem Gerät und/oder Knoten in eine vorgegebene mechanische Bewegung und/oder andere physikalische Größen (z. B. Druck oder Temperatur) umgesetzt wurden oder vor der Abarbeitung der Steuerbefehle umgesetzt sein sollen (z. B. für ein Vorbereiten eines Werkstückes). Mit den vorausgesetzten Steuerbefehlen (sofern diese erfolgreich ausgeführt) wurden dann beispielsweise die Aktoren der Geräte und/oder der Knoten derart angesteuert, dass ein Werkstück in den Zustand bzw. Fertigungszustand versetzt wurde, dass z. B. eine Weiterverarbeitung möglich ist oder nach der Abarbeitung der vorausgesetzten Steuerbefehle ermöglicht wird. Entsprechend können dann z. B. die entsprechenden Geräte/Knoten mit den Steuerbefehlen der Steuertransaktion derart angesteuert werden, dass die Weiterverarbeitung erfolgt (wenn z. B. die vorausgesetzten Steuerbefehle ausgeführt wurden und für diese insbesondere Ausführungsbestätigungsnachrichten vorliegen). Mittels der vorausgesetzten Steuerbefehle und der Geräte und/oder Knoten kann beispielsweise auch ein Regelkreis geregelt und/oder gesteuert werden, indem beispielsweise die Ausführungsbestätigungsnachrichten für ausgeführte/vorausgesetzte Steuerbefehle durch die Vorrichtung oder die Netzwerkapplikation ausgewertet werden und entsprechende Steuerbefehle als Reaktion auf die Ausführungsbestätigungsnachrichten erzeugt werden. Bei den vorausgesetzten Steuerbefehlen kann es sich beispielsweise auch um Steuerbefehle handeln, mit denen ein kryptographisches Gerät und/oder Verfahren angesteuert wurde (z. B. eine Nutzerauthentisierung oder Nutzerauthentifizierung). Alternativ oder zusätzlich kann durch die vorausgesetzten Steuerbefehle beispielsweise eine Erfassung von bestimmten Messgrößen (z. B. durch einen Sensor) vorgegeben sein. Beispielsweise wird damit vorgegeben, dass entsprechende Transaktionen mit entsprechenden Messwerten vorgegebene Messwertbereiche oder Schwellwerte einhalten sollen. Die Messwerte können beispielsweise einen Wert einer gemessenen Größe (z. B. 30 °C) und/oder Datum/Uhrzeit der Erfassung und/oder Ort der Erfassung und/oder Sensortyp und/oder weitere Informationen über den Sensor (z. B. Messgenauigkeit) sein.

Unter einem "separaten und/oder direkten Kommunikationskanal" kann im Zusammenhang mit der Erfindung beispielsweise eine Datenübertragung (z. B. ein Senden, ein Empfangen, ein Übertragen, ein Bereitstellen oder ein Übermitteln) mittels eines Kommunikationskanals verstanden werden, wie dieser beispielsweise durch das Lightning-Netzwerk zunächst nur für die Übertragung von Kryptowährung realisiert ist. Beispielsweise können über diesen Kanal Transaktionen/Nachrichten schneller verschickt werden und eine Bestätigung über diesen Datenaustausch im verteilten Datenbanksystem oder der Netzwerkapplikation gespeichert werden. Damit können beispielsweise wichtige und/oder zeitkritische Steuerbefehle bzw. Steuertransaktionen mit höherer Geschwindigkeit an ein entsprechendes Gerät übertragen werden und dabei z. B. die langsamere Datenübertragung des verteilten Datenbanksystems (z. B. bei der Replikation der Datenblöcke/Transaktionen) oder der Netzwerkapplikation vermieden werden. Beispielsweise können für die Erfindung und die genannten Aspekte, Ausführungsbeispiele, Ausführungsformen der Erfindung und ihre Varianten für eine Datenübertragung zwischen einem Gerät (und/oder Knoten) ein separater und/oder direkter Kommunikationskanal aufgebaut werden. Beispielsweise werden bei einem direkten Kommunikationskanal die Transaktionen/Nachrichten direkt zwischen einem Sender (z. B. das Bereitstellungsmodul und/oder das Bestimmungsmodul) und einem Empfänger (z. B. das Gerät, das die Steuerbefehle ausführen soll) ausgetauscht, ohne dass weitere Knoten und/oder Geräte des verteilten Datenbanksystems oder der Netzwerkapplikation in diesem Datenaustausch involviert sind. Hingegen können bei einem separaten Kommunikationskanal Knoten und/oder Geräte des verteilten Datenbanksystems oder der Netzwerkapplikation in den Datenaustausch involviert sein. Wurde der separate und/oder direkte Kommunikationskanal erfolgreich zwischen dem Sender und dem Empfänger aufgebaut (es wurde also hierdurch insbesondere eine Kommunikationsverbindung etabliert), so können Daten beispielsweise in Form von Transaktionen oder Nachrichten zwischen dem Sender und dem Empfänger ausgetauscht werden. Beispielsweise können die notwendigen Daten für ein Ermitteln der Ausführbarkeit und/oder die Steuertransaktionen zwischen dem Sender und/dem Empfänger ausgetauscht werden. Wird beispielsweise der Kommunikationskanal geschlossen/beendet (also es wird insbesondere eine Kommunikationsverbindung beendet) so wird beispielsweis ein Ergebnis der Datenübertragung z. B. in Form von Transaktionen (z. B. als eine Übertragungsbestätigungstransaktion) in dem verteilten Datenbanksystem gespeichert (z. B. in Datenblöcken des verteilten Datenbanksystems) oder in der Netzwerkapplikation gespeichert. Das Ergebnis der Datenübertragung kann beispielsweise eine Bestätigung der Übertragung oder des Empfangs der entsprechenden Transaktionen/Nachrichten sein und/oder ein Analyseergebnis und/oder die letzte übertragene Transaktion/Nachricht, die über den separaten und/oder direkten Kommunikationskanal übertragen wurde, bevor der Kommunikationskanal geschlossen wurde. Das Speichern der Transaktion mit dem Ergebnis kann beispielsweise durch den Sender und/oder Empfänger erfolgen. Bei dem Analyseergebnis kann es sich beispielsweise um die Bestätigung der Ausführbarkeit der Steuerbefehle durch ein Gerät handeln, wobei beispielsweise ein entsprechendes Gerät bestätigt hat, dass es die Steuerbefehle ausführen kann. Dies kann beispielsweise wiederum in einer Transaktion (z. B. in einer Ausführbarkeitsbestätigungstransaktion oder in eine Bestätigungsnachricht) gespeichert werden und z. B. in den Ausführungsanforderungen (z. B. in den gerätespezifischen Anforderungen) gespeichert werden. Alternativ oder zusätzlich wird eine Ausführbarkeitsbestätigungstransaktion in dem verteilten Datenbanksystem oder der Netzwerkapplikation gespeichert. Die Ausführbarkeitsbestätigungstransaktion umfasst dabei beispielsweise einen eindeutigen Identifizierer für das Gerät, das in der Lage ist, die Steuerbefehle auszuführen bzw. die entsprechenden Ausführungsanforderungen erfüllt. Alternativ oder zusätzlich umfasst die Ausführbarkeitsbestätigungstransaktion beispielsweise Daten über die Ausführung z. B. wie gut bzw. zu welchem Grad die Ausführungsanforderungen erfüllt werden (z. B. wie schnell die Steuerbefehle abgearbeitet sind, wann diese sicher abgearbeitet sind, wie genau oder präzise die Steuerbefehle ausgeführt werden - beispielsweise beim Ausführen von Fertigungssteuerbefehlen). Alternativ oder zusätzlich umfasst die Ausführbarkeitsbestätigungstransaktion beispielsweise gerätespezifische Daten des entsprechenden Gerätes, die für die Ausführung der Steuerbefehle relevant sind, wobei z. B. die gerätespezifische Daten von dem entsprechenden Gerät zum Zeitpunkt der Bestätigung der Ausführbarkeit durch das Gerät ermittelt wurden. Dabei erfolgt z. B. die Bestätigung der Ausführbarkeit und die Ermittlung der gerätespezifischen Daten (in etwa) zum gleichen Zeitpunkt - beispielsweise innerhalb eines Zeitfensters von wenigen Sekunden oder Minuten. Beispielsweise können die Daten der Ausführbarkeitsbestätigungstransaktion auch zwischen dem Sender und dem Empfänger ausgetauscht worden sein, bevor die Ausführbarkeitsbestätigungstransaktion z. B. in dem verteilten Datenbanksystem oder der Netzwerkapplikation gespeichert wird. Die Ausführbarkeitsbestätigungstransaktion kann beispielsweise noch kryptographisch geschützt sein (z. B. kann diese verschlüsselt sein oder durch eine Transaktionsprüfsumme geschützt sein). Auch können beispielsweise die Steuertransaktionen auf analoge Weise an das entsprechende Gerät übertragen werden, das die Steuerbefehle ausfühlen soll bzw. kann. Hierzu kann beispielsweise ein weiterer separater und/oder direkter Kommunikationskanal zwischen dem Sender und dem Empfänger aufgebaut werden. Alternativ kann der oben genannte Kommunikationskanal beispielsweise weiterverwendet werden. Über den entsprechenden Kommunikationskanal werden dann beispielsweise die entsprechenden Steuertransaktionen an das entsprechende Gerät übertragen. Wird beispielsweise der Kommunikationskanal wieder geschlossen/beendet, wenn die Übertragung (erfolgreich) abgeschlossen wurde, wird das Ergebnis der Übertragung z. B. als eine Übertragungsbestätigungstransaktion in dem verteilten Datenbanksystem oder der Netzwerkapplikation gespeichert. Auch kann beispielsweise die zuletzt über den Kommunikationskanal ausgetauschte Nachricht in der Übertragungsbestätigungstransaktion gespeichert werden (z. B. falls der Kommunikationskanal unterbrochen wird) und die Übertragungsbestätigungstransaktion z. B. dann im verteilten Datenbanksystem oder in der Netzwerkapplikation gespeichert werden. Diese zuletzt ausgetauschte Nachricht kann beispielsweise verwendet werden, um bei einem erneuten Aufbau des Kommunikationskanals den Datenaustausch bzw. die Datenübertragung fortzusetzen. Die Übertragungsbestätigungstransaktion kann beispielsweise auch kryptographisch geschützt sein. Die Übertragungsbestätigungstransaktion kann beispielsweise die Steuerbefehle und/oder die Steuertransaktion und/oder die letzte ausgetauschte Nachricht zwischen dem Sender und dem Empfänger umfassen. Eine Fortsetzung des Datenaustausches bzw. der Datenübertragung kann beispielsweise auch für andere Datenübertragungen genutzt werden und ist nicht speziell auf die Datenübertragung bzw. den Datenaustausch von Steuertransaktionen beschränkt.

Der separate und/oder direkte Kommunikationskanal ist dahingehend vorteilhaft, um eine Übertragungsgeschwindigkeit und/oder Übertragungslatenzzeit zu verbessern. Es ist beispielsweise auch ein Hybridverfahren möglich, indem beispielsweise ein entsprechender Kommunikationskanal für zeitkritische Steuerbefehle (z. B. mit hoher Priorität) genutzt wird. Beispielsweise kann anhand der Ausführungsanforderungen (z. B. es sind zeitkritische Steuerbefehle oder Steuerbefehle für eine Echtzeitanwendung) bestimmt werden, ob es sich um entsprechende Steuerbefehle handelt, die über einen entsprechenden separaten Kommunikationskanal übertragen werden sollen. Alternativ oder zusätzlich kann das Bestimmungsmodul beispielsweise beim Bestimmen der Ausführungsanforderungen entsprechende Übertragungsanforderungen für eine Datenübertragung der Steuertransaktionen bestimmen. Die Übertragungsanforderungen können beispielsweise in den Ausführungsanforderungen gespeichert werden. Anhand der Übertragungsanforderungen kann dann beispielsweise das Bereitstellungsmodul ermitteln, ob die Steuertransaktionen über eine Übertragung an das entsprechende Gerät in dem verteilten Datenbanksystem oder der Netzwerkapplikation gespeichert werden oder ob der separate und/oder direkte Kommunikationskanal für eine Datenübertragung an das entsprechende Gerät genutzt wird. Die Datenübertragung kann dann beispielsweise durch das Bereitstellungsmodul der Vorrichtung erfolgen, das hierzu z. B. ein entsprechendes Kommunikationsmodul (z. B. eine Netzwerkschnittstelle) umfasst.

Die Erfindung ist dahingehend vorteilhaft, um beispielsweise eine Blockkette, eine Netzwerkapplikation oder ein verteiltes Datenbanksystem z. B. als industrielle Kommunikationsinfrastruktur und/oder Steuerungsplattform z. B. im Fertigungsbereich einzusetzen. Hierdurch kann insbesondere eine Fertigungsinfrastruktur realisiert werden, bei der Geräte (z. B. autonome Geräte) von unterschiedlichen Betreibern in einer vertrausunwürdigen Umgebung eine Vertrauensbasis benötigen, um einen Fertigungsauftrag abzuarbeiten (Trust in a trustless environment). Hierbei können z. B. durch die Konfigurierbarkeit und die Auswählbarkeit der Validierung und/oder Übertragung beispielsweise zeitliche Anforderungen vorgegeben werden. Das verteilte Datenbanksystem validiert z. B. nur diejenigen Transaktionen, die von einem entsprechenden blockkettenbasierten Fertigungssystem bzw. den entsprechenden Geräten ausgeführt werden können, indem z. B. eine vorgegebene Anzahl von Knoten bestätigen, dass sie diese Transaktionen ausführen.

Beispielsweise ist es auch möglich, dass die vorgegebene Anzahl von Knoten, zumindest zum Teil oder vollständig Knoten eines Shards sind (z. B. eines Ethereum-Shards). Alternativ ist es auch möglich, dass die vorgegebene Anzahl von Knoten, zumindest zum Teil Knoten von unterschiedlichen Shards sind. Die jeweiligen Shards einer Netzwerkapplikation (z. B. eines verteilten Datenbanksystems wie einer Blockkette) können spezifisch für Knoten in Form Geräten gebildet werden.

Es ist beispielsweise auch möglich für Shards bestimmte Anforderungen vorzugeben, die durch die Geräte des Shards zu erfüllen sind. Derartige Anforderungen können z. B. sein, dass es sich bei den Geräten des Shards um sichere Geräte und/oder Geräte mit hoher Zuverlässigkeit und/oder hoher Fertigungspräzision handelt. Alternativ oder zusätzlich kann durch die Anforderungen vorgegeben sein, dass der entsprechende Shard Geräte eines bestimmten Typs oder einer bestimmten Geräteklasse umfasst oder eine vorgegebene Konfiguration für eine Kombination von bestimmten Gerätetypen und/oder Geräteklassen umfasst. Entsprechende können z. B. Fertigungsgeräte, Prüfgeräte, Überwachungsgeräte oder eine Kombination davon sein. Die Auswahl der Geräte eines Shards kann beispielsweise anhand der Geräteeigenschaften erfolgen.

Die Erfindung eignet sich insbesondere für IoT Anwendungen der Blockkette, bei der z. B. zumindest ein Gerät irgendeine Steueraktion ausführen soll, wobei die Ausführung gewissen Ausführungsanforderungen unterworfen ist.

Mittels der Erfindung können konventionelle Blockketten z. B. dahingehend verbessert werden, um die Ausführbarkeit von Transaktionen zu verbessern oder zu verhindern, dass nicht ausführbare Transaktionen in der Blockkette gespeichert werden. Dies ist insbesondere, wenn die Steuertransaktionen bzw. die Steuerbefehle einen Smart-Contract kodieren bzw. umfassen, da es z. B. einen Bedarf dahingehend gibt, vorzugsweise ausführbare Smart-Contracts in einer Blockkette zu speichern.

Im digitalen industriellen Umfeld ist die Vernetzung von Edge-Devices und IoT-Geräten ein wichtiger Aspekt. Insbesondere das Bilden von Ökosystemen, bei denen diese entsprechenden Geräte bzw. eine Vielzahl solcher Geräte miteinander kommunizieren, um Prozesse zu steuern, ist eine Herausforderung. Beispielsweise können von einem derartigen IoT-Ökosystem Geräte von unterschiedlichen Herstellern und/oder unterschiedlichen Besitzern umfasst sein. Eine besondere Herausforderung ist dabei die Kommunikation in Systemen mit unterschiedlichen Geräteherstellern oder Geräteeigentümern, die sich nicht zwangsläufig vertrauen. Seit einigen Jahren sind Kommunikationsinfrastrukturen (auch Netzwerkapplikationen genannt) verfügbar, die eine vertrauenswürdige Kommunikation zwischen solchen Geräten selbst in einer als nicht vertrauenswürdig eingestuften Umgebung und ggf. ohne zentrale vertrauensbildenden Drittpartei erlauben. Eine solche Technologie sind zum Beispiel Distributed Ledger Technologien (DLT).

Problematisch beim Einsatz von DLT ist beispielsweise, dass an einzelne IoT-Knoten große Datenmengen übertragen werden, die für diese irrelevant sind. Daraus resultieren Probleme hinsichtlich der Bandbreitenauslastung, Speicherauslastung des IoT-Gerätes und eine unnötige Auslastung des Prozessors eines solchen IoT-Gerätes.

Bisher wurde das Problem dadurch gelöst, dass es eine vertrauenswürdige zentrale Instanz gab, der vertraut wurde. Die Vertrauenswürdigkeit dieser zentralen Instanz ist dabei häufig nicht durch technische Maßnahmen sichergestellt, sondern lediglich durch deren "Ruf" bzw. eine nicht technische, rein vertragliche Absicherung. Solche zentralen Instanzen funktionieren bei Peer-2-Peer-Systemen naturgemäß schwer bis gar nicht.

Zur Ressourcen-Schonung bei IoT-Knoten zum Beispiel in Blockchain-Infrastrukturen wird ein Konzept der sogenannten Light Nodes implementiert. Diese Light-Nodes erhalten nur einen Teil der Daten, die in einer Blockchain repliziert wird.

Light Nodes besitzen, anders als Full Nodes, keine vollständige Kopie der Blockchain, sondern nur einen Teil davon, die sogenannten Block-Header bzw. Blockzeilen. Diese reichen ihnen für eine Überprüfung der Gültigkeit der laufenden Transaktionen aus. Mit der Methode Simplified payment verification (SPV) können sie nämlich Transaktionen eines Blocks verifizieren, ohne den ganzen Block downloaden zu müssen.

Mit anderen Worten enthalten Light Nodes zwar die Header der Blöcke, aber noch immer können es Blöcke sein, die den konkreten Knoten nicht interessieren. Jedoch ist diese Auswahl der Daten nicht selektiv und auch nicht auf einen bestimmten Zweck für eine industrielle Implementierung gerichtet.

Um die die genannten Probleme und Nachteile aus dem Stand der Technik zu überwinden wird eine verbesserte Netzwerkapplikation, zum Beispiel in Form eines verbesserten DLT vorgeschlagen.

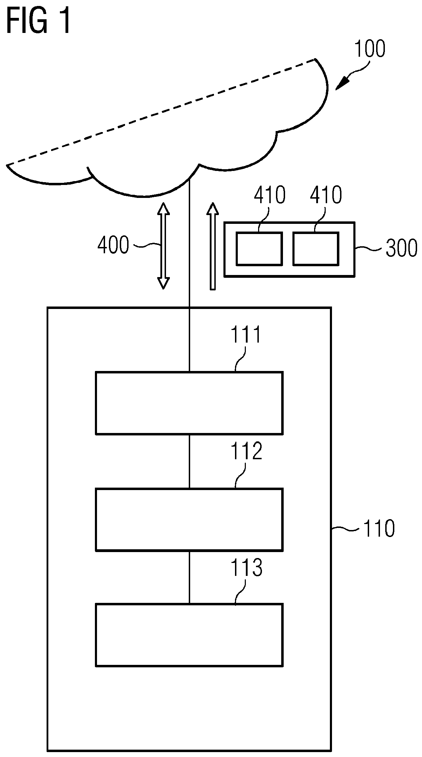

Figur 1 zeigt schematisch einen Knoten 110 eines Netzwerks 100, gemäß Ausführungsbeispielen der Erfindung.

Der Netzwerknoten 110 umfasst eine Schnittstelle 111, einen Prozessor 112 und einen Speicher 113. Über die Schnittstelle 111 ist der Netzwerknoten mit dem Netzwerk 100 kommunikativ verbunden, wobei der Knoten über die Schnittstelle von dem Netzwerk 100 Transaktionen 400 erhalten kann und Transaktionen 400 an das Netzwerk 100 senden kann.

Die Kernidee der verbesserten Netzwerktechniken ist eine Implementierung von Target-Nodes (zum Beispiel IoT-Geräte), die neben Full-Nodes in der Infrastruktur einer Netzwerkapplikation integriert werden können. Ein Target-Node ist ein Netzwerkknoten 110, der sich von konventionellen Knoten 120 (z.B. Full-Nodes) dadurch unterscheidet, dass dieser sich für bestimmte Arten von Transaktionen 400 subskripiert. Hierzu wird für jeden erfindungsgemäßen Knoten 110, ein spezifisches Kriterienprofil 300 festgelegt.

Über die Schnittstelle 111 kann der Knoten ein Kriterienprofil 300 an das Netzwerk 100 übermitteln. Das Kriterienprofil 300 umfasst mehrere Merkmale 410, die dadurch eine Transaktion 400 charakterisieren. In einigen Beispielen, definiert das Kriterienprofil 300 Merkmale 410, die eine Transaktion 400 charakterisieren. Basierend auf dem Kriterienprofil 300 werden ausschließlich Transaktionen 400 an den Netzwerkknoten 110 übertragen, welche dem Kriterienprofil 300 das Netzwerknoten 110 entsprechen. In einigen Beispielen, können alle Transaktionen an den Knoten 110 gesendet werden, der Knoten 110 empfängt jedoch ausschließlich Transaktionen 400, die seinem Kriterienprofil 300 entsprechen.

Einigen Beispielen kann der Knoten konfiguriert sein, um Transaktionen 400, welche einem Kriterienprofil 300 nicht entsprechen, abzulehnen. In einigen Ausführungsbeispielen ist das Netzwerk 100, oder eine Netzwerkapplikation, konfiguriert, um nur Transaktionen, welche im Kriterienprofil 300 des Knoten 110 entsprechen, an den Knoten 110 zu senden. Das Kriterienprofil 300 kann in dem Speicher 113 des Knoten 110 gespeichert sein, oder an eine Netzwerkapplikation übertragen werden.

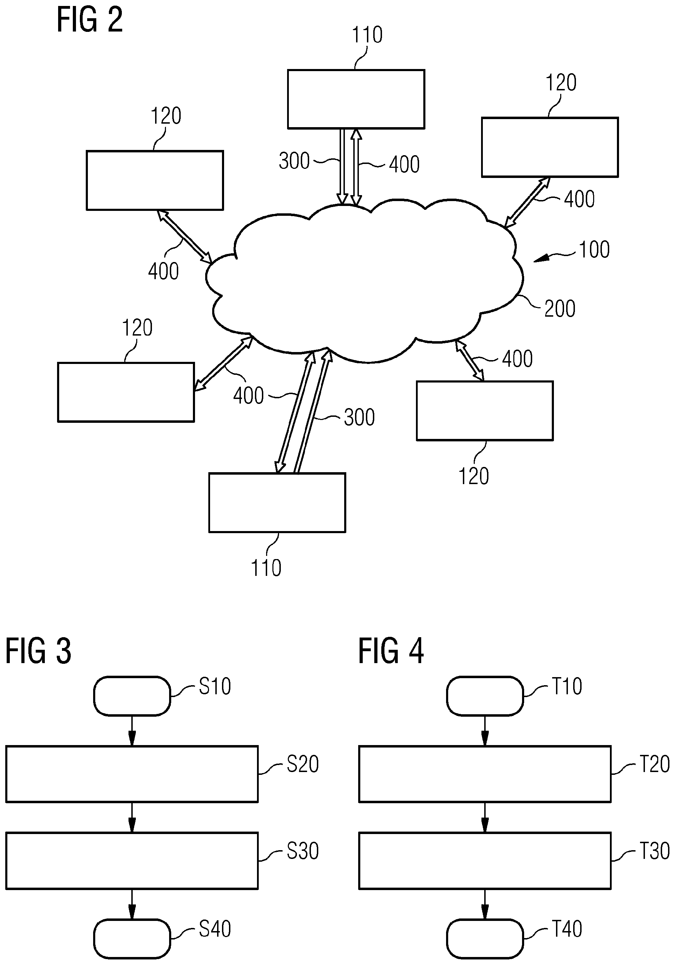

Figur 2 zeigt schematisch eine Netzwerkapplikation 200 mit mehreren Knoten 110, 120, gemäß Ausführungsbeispielen der Erfindung.

Die Netzwerkapplikation 200 ist auf einem Netzwerk 100 realisiert, welches eine Vielzahl von Knoten 110, 120 umfasst. Über das Netzwerk 100 tauschen die Knoten 110, 120 Transaktionen 400 aus. Das Netzwerk 100 ist als dezentrales Netzwerk realisiert, wobei das Netzwerk 100 keine zentrale vertrauenswürdige Instanz aufweist.

Die Netzwerkapplikation 200 ist konfiguriert von einem oder mehreren erfindungsgemäßen Knoten 110 jeweils ein Kriterienprofil 300 zu empfangen. In dem Kriterienprofil 300 sind Merkmale 410 parametrisiert, die definieren, welche Transaktionen 400 von der Netzwerkapplikation an den jeweiligen Knoten 110 gesendet werden sollen.

Die Netzwerkapplikation 200 ist weiter konfiguriert, um die Kriterienprofile 300 von einem oder mehreren Knoten 110 in einem Repository zu speichern. Das Repository kann einen beliebigen Speicher, welcher durch das Netzwerk 100 zugänglich ist, umfassen.

Die Netzwerkapplikation 200 ist weiter konfiguriert, um beim Senden von Transaktionen 400 basierend auf den Kriterienprofile 300, eine Transaktion 400 selektiv basierend auf einer Bestimmung, ob die Transaktion einem oder mehreren Kriterienprofilen 300 entspricht, an den bzw. die entsprechenden Knoten 110, 120 zu übertragen.

Das Kriterienprofil 300 gibt beispielsweise Anforderungen für Knoten oder Geräte vor, die die Transaktionen 400 empfangen und/oder verarbeiten und/oder speichern sollen. Mittels des Kriterienprofils werden anhand der Geräteeigenschaften (der Knoten und/oder Geräte) und/oder der Anforderungen entsprechend geeignete Knoten und/oder Geräte ausgewählt, die für den Empfang und/oder die Verarbeitung und/oder die Speicherung der Transaktionen geeignet sind.

Zum Beispiel wird eine Transaktion 400, welche Merkmale 410 aufweist, die einem Kriterienprofil 300 eines Knoten 110 entsprechen, an diesem Knoten gesendet. Die entsprechende Transaktion 400 wird auch an weitere herkömmliche Knoten 120 des Netzwerks gesendet. Wenn die Merkmale 410 ein weiteres Kriterienprofil 300 eines weiteren Knoten 110 nicht entsprechen, dann wird die entsprechende Transaktion 400 nicht an den weiteren Knoten 110 gesendet.

Anhand des Kriterienprofils 300 entscheidet die Netzwerkapplikation 200, welche Datenblöcke oder Transaktionen 400 an einen entsprechenden Target-Node 110 (z.B. IoT-Gerät) übertragen werden. Die Netzwerkapplikationsinfrastruktur 100 kann hierzu ein Target-Node-Repository umfassen mit den zugehörigen Kriterienprofilen 300 von entsprechenden IoT-Geräten 110.

Um die Transaktionen 400 zu übertragen können in einer Variante ein oder mehrere Kommunikationskanäle genutzt werden.

Ein entsprechender Kommunikationskanal kann z. B. für eine Übertragung anhand eines Kriterienprofils 300 für eine entsprechende Transaktion 400 ausgewählt werden. Der Knoten 110 kann die Transaktion 400 über einen basierend auf oder entsprechend seines Kriterienprofils 300 ausgewählten Kommunikationskanal empfangen, entsprechend kann die Netzwerkapplikation 200 unter Verwenden des(der) Kriterienprofil(e) 300 eines (oder mehrerer) Knoten 110 einen Kommunikationskanal für die Übertragung einer Transaktion 400 auswählen oder bestimmen.

Bei dem Kommunikationskanal kann es sich z. B. um einen separaten Kommunikationskanal und/oder einen direkten Kommunikationskanal und/oder einen logischen Kommunikationskanal, welcher sich beispielsweise durch Konventionen und Regeln zur Verwendung direkter Kommunikationskanäle in der Anwendung ergibt, handeln.

Das Kriterienprofil 300 eines IoT-Gerätes 110 kann dabei folgende Merkmale einzeln oder in einer beliebigen Kombination umfassen:
Einen öffentlicher eindeutiger Identifizierer des IoT-Gerätes, z.B. durch eine PUF, wie beschrieben unter https://de.wikipedia.org/wiki/Physical_unclonable_function, des Gerätes, einen digitalen Fingerprint des Gerätes, zum Beispiel auch PUF-basiert, eine UID in einem internen Speicher oder Wallet des IoT Gerätes.

In einigen Beispielen kann der öffentliche eindeutige Identifizierer beispielsweise anhand eines privaten eindeutigen Identifizierers gebildet werden (zum Beispiel durch eine Schlüsselableitungsfunktion). Auch kann der private eindeutige Identifizierer zum Beispiel durch eine PUF des Gerätes, einen digitalen Fingerprint des Gerätes (zum Beispiel auch PUF-basiert), eine UID in einem internen Speicher oder Wallet des IoT Gerätes, private kryptographische Schlüssel in einer Wallet oder einem Speicher des IoT-Gerätes gebildet werden oder sein.

Einen für den Knoten 110 relevanten Datentyp von Transaktionen 400 bzw. Nachrichten, zum Beispiel Steuertransaktionen zum Steuern von Geräten, Fertigungssteuerungstransaktionen, Bezahltransaktionen, sicherheitsrelevante Merkmale.

Einen für den Knoten 110 relevanten Gruppentyp von Transaktionen, zum Beispiel Transaktionen, die aus einer bestimmten geographischen Region stammen, Transaktionen, die eine Verarbeitungspriorität umfassen, Transaktionen die einer spezifischen Applikation, oder Transaktionen einer spezifischen Applikationsinstanz.

Geräteeigenschaften des Target-Nodes 110, zum Beispiel welche Arten von Steuerbefehlen aus Transaktionen 400 dieser verarbeiten kann, welche Funktionen er umfasst, Angaben über die Art und Weise der Ausführung der Steuerbefehle - zum Beispiel wie schnell oder wie präzise die Steuerbefehle der Transaktion ausgeführt werden.

Das Kriterienprofil 300 wird durch das IoT Gerät 110 beispielsweise bei einem Verbindungsaufbau mit der Netzwerkapplikationsinfrastruktur 100 an die Netzwerkapplikation 200 bzw. an das Repository übermittelt. Das Kriterienprofil 300 kann aber auch abhängig von bestimmten Bedingungen (zum Beispiel Hardwareupgrade des Gerätes, Ausfall eines anderen Gerätes) oder zu vorgegeben Zeitpunkten oder Intervallen aktualisiert werden. Das Repository kann wiederum auf unterschiedliche Art und Weise realisiert werden, beispielswiese im einfachsten Fall als zentrale Komponente, aber auch dezentral, verteilt in den Full-Nodes 120, oder als spezifisches Kriterienprofil 300 in einem der Target Nodes 100.

Den Transaktionen 400 können beispielswese entsprechende Typdaten (z.B. im Sinne von Labels, oder relationalen Daten) zugeordnet sein. Diese Zuordnung kann beispielsweise explizit durch den Sender der Transaktion 400 erfolgen oder es wird implizit durch die Netzwerkapplikation 200 festgestellt, indem zum Beispiel der Inhalt einer entsprechenden Transaktion 400 analysiert wird.

Bei einem Replizierungsvorgang zwischen den Full-Nodes 120 wird dann zum Beispiel: zunächst über einen Look-Up-Table z.B. für Gossipping Mechansimen identifiziert, welche Target-Nodes 110 sich für das der Transaktion 400 zugehörige Kriterium, d.h. Merkmal 410, registriert haben. Danach werden zum Beispiel weitere Kriterien abgeprüft, die spezifisch für einen einzelnen Target-Node 110 vorgegeben sind. Beispielsweise kann hierdurch eine Gruppe von Target-Nodes 110 als Ziel identifiziert werden oder Target-Nodes 110 in einer bestimmten Region als Ziel identifiziert werden. Auch eine bestimmte Position oder Adresse oder Geräteeigenschaften des Target-Node 110 können in dem Kriterienprofil 300 hinterlegt sein.

In einer Variante ist das Kriterienprofil 300 nicht direkt einem Target-Knoten 110 zugeordnet, es definiert vielmehr als Zustellmechanismus, um bestimmte Typen oder Gruppen von Transaktionen 400 an geeignete Target-Nodes 110 zu Senden. Hierzu wird das Kriterienprofil 300 in der Netzwerkapplikation 400 hinterlegt und anhand des Kriterienprofils 300 werden geeignete Target-Nodes 110 identifiziert.

Beispielsweise kann hierdurch eine Gruppe von Target-Nodes 110 als Ziel identifiziert werden oder Target-Nodes 110 in einer bestimmten Region als Ziel identifiziert werden. Auch eine bestimmte Position oder Adresse oder Geräteeigenschaften des Target-Node können in dem Kriterienprofil hinterlegt sein. Beispielsweise können Geräteeigenschaften interne Eigenschaften eines Geräts und/oder Eigenschaften die Umgebung des Gerätes, insbesondere bei mobilen Geräten, betreffen.

In einer Variante werden durch das Kriterienprofil 300 ggf. dynamisch Übertragungskanäle für bestimmte Arten von Transaktionen 400 realisiert, dies entspricht in einem Beispiel einem sogenannten Subscribe-Ansatz für Knoten einer verteilten Datenbank.

In einem Beispiel ist der Replikationsmechanismus derart modifiziert, dass sich die Target-Nodes 110 bei einem Übertragungskanal mittels des Kriterienprofils 300 registrieren und bei einer Replikation der Blöcke/Transaktionen 400 die Target-Nodes 110 nur Transaktionen 400 erhalten, die den Kriterien des Übertragungskanals entsprechen.

In einer weiteren Variante können beispielsweise durch das Kriterienprofil 300 für bestimmte Nachrichtentypen/Transaktionstypen spezifische Verarbeitungsmechanismen vorgegeben werden. Beispielsweise kann bei Transaktionen 400, die aufgrund eines kritischen Zustands eines Gerätes versendet wurden, deren Verarbeitung und Übertragung beschleunigt werden. Solche Nachrichten haben zum Beispiel eine hohe Verarbeitungspriorität. Die Netzwerkapplikation 200 kann dann zum Beispiel entscheiden, nicht auf die Datenreplikation zu warten, sondern überträgt die entsprechende Nachricht/Transaktion an einen geeigneten Knoten 110 über einen beschleunigten Kommunikationsmechanismus. Dies kann zum Beispiel einem ähnlichen Konzept folgen, wie dies durch das Lightning-Protokol vorgegeben ist (wie beschrieben unter https://de.wikipedia.org/wiki/Lightning-Netzwerk).

In einer weiteren Variante können beispielsweise für Target Node Gruppen, d.h. Target Nodes 110 mit gleichen Kriterienprofil 300, beispielsweise in die Blöcke bzw. Transaktionen 400 der Blockkette auch zusätzliche Hashes aufgenommen werden, die eine spezifische Netzwerkapplikation (z. B. spezifische Blockkette) für Target Node Groups erlauben.

In einer Variante kann beispielsweise eine entsprechende Netzwerkapplikation (z. B. eine Cloud, eine Blockkette, ein verteilter Speicher) erzeugt bzw. instanziiert werden, die beispielsweise Knoten (oder Target-Knoten) umfasst, die das geforderte Kriterienprofil für entsprechende Transaktionen erfüllen. Hierdurch können beispielsweise Transaktionen verarbeitet werden, für die anfangs kein passender Target-Knoten (Target Node) oder Knoten oder Gerät zur Verfügung steht. Dies kann beispielsweise mittels virtueller Rechner (z. B. virtuelle Rechner, die durch VM-Ware erzeugt werden) realisiert werden.

In einer weiteren Variante kann beispielsweise ein entsprechender Knoten instanziiert oder erzeugt werden, der das geforderte Kriterienprofil für entsprechende Transaktionen erfüllt. Dies Ist vorteilhaft, wenn z. B. im Augenblick kein geeigneter Knoten bzw. kein geeignetes Gerät zum Empfangen und/oder Speichern und/oder Verarbeiten der entsprechenden Transaktionen zur Verfügung steht. Dies kann beispielsweise mittels virtueller Rechner (z. B. virtuelle Rechner, die durch VM-Ware erzeugt werden) realisiert werden.

Die Konfiguration eines instanziierten/erzeugten Knotens oder Netzwerkapplikation erfolgt vorzugsweise anhand des Kriterienprofils (z. B. anhand der durch das Kriterienprofil vorgegebenen Geräteeigenschaften).

In einer weiteren Variante ist ein Knoten ein Gerät oder ein Knoten ist als ein Gerät realisiert.

Beispielhaft bedeutet dies, dass in einem Block der Transaktionen 400 für ein Kriterium A hat, im Sinne einer Blockkette der nötige Hash des letzten vorherigen Blockes mit Transaktionen des Kriteriums A aufgenommen wird. Damit entsteht eine logische Blockkette in der übergeordneten Blockkette spezifisch für das Kriterium A. Alle Target Nodes 110, die nur am Kriterium A interessiert sind, haben damit durch ihre lokalen Replica dieser Blocks eine für sich vollständige Blockkette, und können damit alle Verifikationen etc. für ihre relevanten Transaktionen vornehmen. Sie nutzen somit für alle Blockketten Management Funktionen die übergeordnete Blockkette, für alle operativen für sie relevanten Transaktionen, das lokale Replikat einer für den Target Node, bzgl. Nachvollziehbarkeit vollständigen Blockkette.

Im Folgenden wird ein Beispiel anhand eines Supply-Chain Use Cases beschreiben. Der Target-Node 110 ist ein Erfassungsgerät, das den Eingang von bestimmten Waren bestätigen soll. Die Steuerung des Target-Node 110 wird über eine Blockchain realisiert und der Target-Node 110 schreibt auch seine Informationen in eine Blockchain. Für den Target-Node sind in diesem Fall zum Beispiel nur Transaktionen 400 relevant, die er benötigt, um die entsprechende Ware zu erfassen, zum Beispiel Zeitpunkt der Lieferung, Ort an dem gescannt werden muss (Barcode oben). Das Erfassungsgerät 110 ist in der Blockkette mit dem Kriterienprofil 300 registriert, so dass nur diese Art von Transaktionen 400 an dieses übermittelt wird. Es wird dabei zum Beispiel vermieden, dass dem Erfassungsgerät 110 Transaktionen für das Bezahlen der Lieferung etc. übermittelt werden.

Figur 3 zeigt ein Flussdiagramm mit Schritten eines Knoten 110, gemäß Ausführungsbeispielen der Erfindung.

Ein Netzwerk 100 umfasst einen Knoten 110. In dem Netzwerk 100 werden Transaktionen 400 zwischen mehreren Knoten übertragen, wobei Transaktionen 400 durch ein oder mehrere Merkmale 410 charakterisiert sind.

Das Verfahren beginnt in Schritt S10. In Schritt S20 stellt der Knoten 110 ein Kriterienprofil 300 bereit. In dem Kriterienprofil 300 des Knoten 110 sind Merkmale festgelegt, anhand derer für eine Transaktion bestimmt wird, ob die Transaktionen an den Knoten 110 übertragen werden soll. In Schritt S30 nimmt der Knoten 110 von dem Netzwerk 100 eine Transaktion 400, welche dem Kriterienprofil 300 entspricht, an. In einem optionalen Schritt, lehnt der Knoten 110 eine Transaktion 400, die seinem Kriterienprofil 300 nicht entspricht, ab. Das Verfahren endet in Schritt S40.

Figur 4 zeigt schematisch ein Flussdiagramm mit Schritten einer Netzwerkapplikation 200, gemäß Ausführungsbeispielen der Erfindung.

Die Verfahren beginnt in Schritt T10. In Schritt T20 empfängt die Netzwerkapplikation 200 von einem Knoten 110 eines Netzwerks 101 ein Kriterienprofil 300 des Knoten 110. In dem Kriterienprofil 300 des Knoten 110 sind Merkmale festgelegt, die definieren, welche Transaktionen an den Knoten 110 übertragen werden sollen. In Schritt T30 sendet die Netzwerkapplikation 200 eine Transaktion 400, welche dem Kriterienprofil 300 des Knoten 110 entspricht, an den Knoten 110. Das Verfahren endet in Schritt T40.

Anhand des Kriterienprofils 300 kann ein Kommunikationskanal auf einer Vielzahl von Kommunikationskanälen des Netzwerks 100 ausgewählt werden, über den die Transaktion 400 übertragen wird.

Im Allgemeinen sehen Beispiele der vorliegenden Offenbarung eine Vielzahl von Schaltungen, Datenspeichern, Schnittstellen oder elektrische Verarbeitungsvorrichtungen z.B. Prozessoren vor. Alle Verweise auf diese Einheiten und andere elektrische Geräte sowie die von ihnen bereitgestellte Funktionen sind nicht auf das beschränkt, was veranschaulicht und beschrieben wird. Während den verschiedenen Schaltkreisen oder anderen offenbarten elektrischen Geräten bestimmte Bezeichnungen zugeordnet werden können, sind diese Bezeichnungen nicht dazu bestimmt, den Funktionsumfang der Schaltkreise und der anderen elektrischen Geräte einzuschränken. Diese Schaltkreise und andere elektrische Geräte können je nach der gewünschten Art der elektrischen Ausführung miteinander kombiniert und/oder voneinander getrennt werden. Es ist zu verstehen, dass jede offenbarte Schaltung oder andere elektrische Vorrichtung eine beliebige Anzahl von Mikrocontrollern, Grafikprozessoreinheiten (GPU), integrierte Schaltungen, Speichervorrichtungen, z.B. FLASH, Arbeitsspeicher(RAM), Read Only Memory (ROM), elektrisch programmierbarer Read Only Memory (EPROM), elektrisch löschbarer programmierbarer Read Only Memory (EEPROM), oder beliebige andere geeignete Ausführungsformen derselben umfassen können, sowie Software, welche miteinander zusammenarbeiten, um die hierin offenbarten Verfahrensschritte durchzuführen. Darüber hinaus kann jede der elektrischen Vorrichtungen konfiguriert sein, um Programmcode auszuführen, der in einem elektronisch lesbaren Datenträger enthalten ist, und der konfiguriert ist, um eine beliebige Anzahl von Schritten gemäß der Verfahren der vorliegenden Offenbarung auszuführen.

Der Begriff Knoten oder Netzwerkknoten soll im Zusammenhang der Erfindung derart ausgelegt werden, dass er eine Komponente eines technischen System, optional einen oder mehrere Sensoren an dem technischen System, und Steuerungsgerät der Komponente einschließt, wobei der Knoten von dem technischen System Daten sammeln, verarbeiten, speichern und/oder weiterleiten kann. Ein Netzwerkknoten kann einen Prozessor, einen Speicher, und eine Schnittstelle zu einem Steuernetzwerk enthalten.

Aus dem oben Gesagten lassen sich einige allgemeine Schlussfolgerungen ziehen:
Der Knoten kann konfiguriert sein, um nur Transaktionen zu empfangen und/oder zu speichern, welche dem Kriterienprofil entsprechen, d.h. welche durch Merkmale gekennzeichnet sind oder Merkmale aufweisen, die dem Kriterienprofil entsprechen. In einigen Beispielen kann der Knoten konfiguriert sein, um weitere oder alle Transaktionen in dem Netzwerk zu empfangen, jedoch nur Transaktionen, welche dem Kriterienprofil entsprechen, zu speichern. In einigen Beispielen kann der Knoten konfiguriert sein, um Transaktionen, welche dem Kriterienprofil entsprechen, gegenüber Transaktionen, welche dem Kriterienprofil nicht entsprechen, bevorzugt, oder schneller, oder getrennt von diesen, zu bearbeiten, weiterzuleiten, oder zu speichern. In einigen Beispielen kann der Knoten konfiguriert sein, um Transaktionen, die seinem Kriterienprofil nicht entsprechen, abzulehnen und nicht zu empfangen.

In einigen Beispielen kann eine Transaktion einem Kriterienprofil entsprechen, wenn eines oder mehrere oder alle Merkmale, mit dem bzw. denen die Transaktion gekennzeichnet ist, mit einem oder mehreren oder allen Merkmalen, welche von dem Kriterienprofil umfasst sind, übereinstimmt bzw. übereinstimmen. Es ist zu verstehen, dass eine oder mehrere spezifische Kombinationen der obigen Kombinationen offenbart sein können, um zu bestimmen, ob eine Übereinstimmung einer Transaktion mit einem Kriterienprofil vorliegt. Beispielsweise kann eine Transaktion einem Kriterienprofil entsprechen, wenn eines von mehreren Merkmalen einer Transaktion mit einem von mehreren Merkmalen eines Kriterienprofils übereinstimmt. In anderen Worten können die Merkmale, welche von einem Kriterienprofil umfasst sind, die Kriterien darstellen, basierend auf denen entschieden wird, ob eine Transaktion dem Kriterienprofil entspricht.

In bevorzugten Beispielen enthält das Netzwerk mehrere erfindungsgemäße Knoten, und die Knoten sind konfiguriert, um ausschließlich Transaktionen, welche ihren Kriterienprofilen entsprechen, in einer DLT basierten Datenbank zu speichern, insbesondere einer Blockchain. Somit können die mehreren Knoten innerhalb einer Blockchain eine weiter Blockchain, oder Unterblockchain, bilden, in welcher Transaktionen entsprechend einem bestimmten Kriterienprofil gespeichert sind. Beispielsweise ist möglich, dass die Knoten einer Blockchain die gleichen Kriterienprofile aufweisen, oder es ist möglich, dass die Kriterienprofile der Knoten der Blockchain eine Schnittmenge von gleichen Merkmalen aufweisen. Beispielsweise ist auch möglich, dass mehrere Knoten als eine Unterblockchain konfiguriert sind, welche unterschiedliche Kriterienprofile aufweisen. Es ist denkbar, dass eine Transaktion in die Unterblockchain aufgenommen wird, die von einem der Knoten selektiert, und von einem anderen der Knoten nicht selektiert wurde.

Ein IoT-Gerät kann derart ausgestaltet sein, dass es als Ziel-Knoten, oder Target-Node, d.h. als Sender eines Kriterienprofils agieren kann. In einer Netzwerkapplikation kann eine Netzwerkstruktur oder Vorrichtung derart ausgestaltet sein, dass sie die Verarbeitung übernimmt, und als Empfänger des Kriterienprofils agiert.

Transaktionen können durch den Knoten basierend auf dem Kriterienprofil selektiv empfangen werden, beispielsweise können Transaktionen basierend auf dem Kriterienprofil selektiert werden und somit selektiv zugestellt und/oder selektiv in einem Netzwerk gespeichert werden.

Das Netzwerk kann eine verteilte Datenbank, insbesondere eine Datenbank basierend auf einer Distributed-Ledger-Technologie (DLT) umfassen.

Der Knoten kann ein Netzwerkknoten, ein Datenbankknoten oder ein Knoten eines IoT-Systems sein, beispielsweise ein Edge-Gerät oder ein IoT-Gerät.

Die Netzwerkapplikation kann ein Netzwerk wie beispielsweise ein P2P-Netzwerk, oder eine Cloud, oder eine Datenbank, wie beispielsweise eine verteilte Datenbank, insbesondere eine Distributed-Ledger-Technology (DLT-)-Datenbank, weiter insbesondere eine Blockchain-basierte Datenbank, umfassen.

Die Merkmale können einen öffentlichen Identifizierer des Knoten umfassen. Die Merkmale können Geräteeigenschaften des Knoten umfassen. Die Merkmale können einen Datentyp einer Transaktion umfassen. Die Merkmale können einen Gruppendatentyp einer Transaktion umfassen.

Das Kriterienprofil kann bei einem Verbindungsaufbau eines Knoten mit einer Netzwerkapplikation des Netzwerks ausgetauscht oder bereitgestellt werden. Beispielsweise kann ein Knoten sein Kriterienprofil an die Netzwerkapplikation übermitteln.

In Reaktion auf ein vorbestimmtes Ereignis innerhalb der Netzwerkapplikation oder des Netzwerks kann die Netzwerkapplikation eine Aktualisierung des Kriterienprofils von einem Knoten anfordern und erhalten, oder der Knoten kann ein Kriterienprofil dynamisch aktualisieren und/oder erneut übermitteln. In Reaktion auf ein Ereignis innerhalb des Knoten, kann der Knoten sein Kriterienprofil dynamisch aktualisieren und/oder neu übermitteln. Bei einem vorbestimmten Zeitpunkt oder nach einem vorbestimmten Zeitintervall kann ein Kriterienprofil aktualisiert oder erneut angefordert oder erneut übermittelt werden.

Die Netzwerkapplikation kann konfiguriert sein, eine Transaktion zu analysieren, um der Transaktion einen Datentyp oder einen Gruppendatentyp, oder allgemein ein Merkmal, zuzuordnen.

In einigen Beispielen an die Netzwerkapplikation auf einer Netzwerkstruktur basieren, welche eine Vielzahl von Knoten enthält. Die Netzwerkapplikation kann konfiguriert sein zum Speichern eines einzigen Kriterienprofils für mehrere Knoten, wobei das einzige Kriterienprofil eine Zuordnung enthält, welche Knoten Transaktionen mit bestimmten Merkmalen erhalten sollen. Beispielsweise kann das Kriterienprofil die Informationen enthalten, dass man einen ersten Knoten ausschließlich Transaktionen gesendet werden sollen, welche vorbestimmte erste Merkmale aufweisen,, und dass an einen zweiten Knoten ausschließlich Transaktionen gesendet werden sollen, welche vorbestimmte zweite Merkmale aufweisen. In derartigen Fällen kann das Kriterienprofil nicht innerhalb eines jeweiligen Knoten gespeichert sein, sondern innerhalb des Netzwerkes durch die Netzwerkapplikation. Netzwerkapplikation kann weiter konfiguriert sein, Transaktionen entsprechend dem einzigen Kriterienprofil an die mehreren Knoten zusenden.

Die Netzwerkapplikation kann einen oder mehrere Knoten umfassen, an welche die Netzwerkapplikation alle der Transaktionen sendet. Beispielsweise können sogenannte Full-Nodes alle innerhalb der Netzwerkapplikation an Knoten gesendete Transaktionen empfangen und speichern.

Sektionen, welche basierend auf einem Kriterienprofil selektiert wurden, können unabhängig von einer vollständigen Datenreplizierung übertragen und/oder verarbeitet werden. Insbesondere können Transaktionen welche unter ein bestimmtes Kriterienprofil eines Knoten fallen, beschleunigt versendet werden, insbesondere kann ein unabhängiger Übertragungsmechanismus, z.B. eine direkte Kommunikation zu dem entsprechenden Knoten, die Transaktionen umfassen. Ein derartiger Übertragungsmechanismus kann beispielsweise ein Lightning-Protokoll umfassen.

In einigen Beispielen, in denen mehrere Knoten gleiches Kriterienprofil aufweisen, können bei einem Speichern einer Transaktion durch die mehreren Knoten, die mehreren Knoten eine zusätzliche kryptographische Prüfsumme in die gespeicherten Daten einschließen, sodass eine ziemliche Blockkette für die Knoten erzeugt wird. Beispielsweise kann die zusätzliche Blockkette unabhängig von einer übergeordneten Blocckette erzeugt werden. Eine übergeordnete Blockkette kann beispielsweise sein, in welcher Full-Nodes sämtliche Transaktionen, die in dem Netzwerk anfallen, speichern.

Die offenbarten Verfahren können rechnergestützt, d.h. computerimplementiert, realisiert sein.

Die offenbarten Techniken eignet sich für insbesondere für IoT-Systeme oder Anwendungen einer Blockchain, bei der zumindest ein Gerät eine Steueraktion mittels Steuerbefehlen ausführen soll. Die Steuerbefehle der Steueraktion können in einer Transaktion innerhalb der Blockchain gespeichert werden. Entsprechend kann die Netzwerkapplikation oder Netzwerkstruktur als ein Automatisierungssystem, oder als verteiltes Datenbanksystem und/oder einer Blockkette zum Steuern einer Ausführung von Transaktionen in einem technischen System, oder einer Kombination der genannten Möglichkeiten, ausgeführt sein.

Zusammenfassend werden Techniken unter anderem für ein Internet-of-Things (IoT) -Steuerungsnetzwerk bereitgestellt, in welchem durch Merkmale gekennzeichnete Transaktionen von einer Vielzahl von Knoten des Netzwerks gespeichert werden. Ein Knoten stellt ein Kriterienprofil des Knoten bereit, durch welches ein oder mehrere Merkmale von Transaktionen definiert sind, die an den Knoten übertragen werden sollen. Eine Netzwerkapplikation des Netzwerks überträgt Transaktionen einer verteilten Datenbank entsprechend dem Kriterienprofil an den Knoten.

Die erfindungsgemäßen Techniken ermöglichen es, um eine performanzbeinflussende und ressourcenintensive Replikation innerhalb einer verteilten Datenbank auf allen Knoten zu vermeiden. Je nach gewählter Implementierung wird dadurch die Übertragung von Transaktionen an einen Knoten beschleunigt, da die entsprechenden Blöcke/Transaktionen unabhängig von einer Replikation zwischen den Full-Nodes an den Knoten übertragen werden können.

Obwohl die Erfindung in Bezug auf bestimmte bevorzugte Ausführungsbeispiele gezeigt und beschrieben wurde, werden durch Fachleute nach dem Lesen und Verstehen der Beschreibung Äquivalente und Änderungen vorgenommen werden. Die vorliegende Erfindung umfasst alle derartigen Äquivalente und Änderungen und ist nur durch den Umfang der beiliegenden Ansprüche begrenzt.

## Patentansprüche

1. Knoten (110) eines Netzwerks (100), in welchem durch Merkmale (410) gekennzeichnete Transaktionen (400) an eine Vielzahl von Knoten (110, 120) des Netzwerks (100) übertragen werden, konfiguriert zum:
- Umfassen eines Kriterienprofils (300) des Knoten (110), welches ein oder mehrere Merkmale (410) von Transaktionen (400) parametrisiert, die an den Knoten (110) übertragen werden sollen, und
- Empfangen von Transaktionen (400), welche das Kriterienprofil (300) erfüllen.

2. Knoten (110) nach Anspruch 1, wobei der Knoten (110) konfiguriert ist, ausschließlich Transaktionen (400), welche das Kriterienprofil (300) erfüllen, zu empfangen und/oder in einer Datenbank zu speichern.

3. Knoten (110) nach einem der vorhergehenden Ansprüche, wobei die Transaktionen (400) über Kommunikationskanäle übertragen werden, und wobei anhand des Kriterienprofils (300) für eine entsprechende Transaktion (400) ein entsprechender Kommunikationskanal aus den Kommunikationskanälen für das Übertragen der entsprechenden Transaktion (400) ausgewählt wird.

4. Knoten (110) nach einem der vorhergehenden Ansprüche, wobei ein entsprechender Kommunikationskanal ein separater Kommunikationskanal und/oder ein direkter Kommunikationskanal und/oder ein logischer Kommunikationskanal, welcher sich beispielsweise durch Konventionen und Regeln zur Verwendung direkter Kommunikationskanäle in der Anwendung ergibt, ist.

5. Knoten (110) nach einem der vorhergehenden Ansprüche, wobei das Netzwerk (100) eine Netzwerkapplikation oder eine verteilte Datenbank (200), insbesondere basierend auf einer Distributed-Ledger-Technologie (DLT), umfasst.

6. Knoten (110) nach einem der vorhergehenden Ansprüche, wobei die Merkmale (410) eines oder mehrere umfassen von:
- einem öffentlichen Identifizierer des Knoten (110),
- Geräteeigenschaften des Knoten (110),
- einem Datentyp (430) einer Transaktion (400), und
- einem Gruppendatentyp (430) einer Transaktion (400).

7. Knoten (110) nach einem der vorhergehenden Ansprüche, wobei das Kriterienprofil (300):
- bei einem Verbindungsaufbau des Knoten (110) mit einer Netzwerkapplikation (200) des Netzwerks (100) bereitgestellt wird, und/oder
- in Reaktion auf ein vorbestimmtes Ereignis innerhalb der Netzwerkapplikation (200) dynamisch aktualisiert wird, und/oder
- in Reaktion auf ein Ereignis innerhalb des Knoten (110) dynamisch aktualisiert wird, und/oder
- bei einem vorbestimmten Zeitpunkt oder nach einem vorbestimmten Zeitintervall aktualisiert wird.

8. Netzwerkapplikation (200), welche durch Merkmale gekennzeichnete Transaktionen (400) an eine Vielzahl von Knoten (110, 120) eines Netzwerks (100) sendet, konfiguriert zum:
- Empfangen eines Kriterienprofils (300) eines Knoten (110), welches ein oder mehrere Merkmale (410) von Transaktionen (400) parametrisiert, die an den Knoten (110) übertragen werden sollen, und
- Senden ausschließlich von Transaktionen (400), welche das Kriterienprofil (300) erfüllen, an den Knoten (110).

9. Netzwerkapplikation nach Anspruch 8, weiter konfiguriert zum:
- Speichern von Kriterienprofilen (300) mehrerer Knoten (110) in einem Repository der Netzwerkapplikation (200), und
- Verwenden der Kriterienprofile (300) aus dem Repository während einem Senden von Transaktionen (400), insbesondere während eines Datenreplizierungsvorgangs einer verteilten Datenbank.

10. Netzwerkapplikation (200) basierend auf einer Netzwerkstruktur (100) mit einer Vielzahl von Knoten (110, 120), in welcher durch Merkmale (410) gekennzeichnete Transaktionen (400) an die Knoten (110, 120) übertragen werden, konfiguriert zum:
- Speichern eines einzigen Kriterienprofils (300), welches für mehrere Knoten (110) Merkmale (410) von Transaktionen (400) parametrisiert, die die jeweiligen Knoten (110) erhalten sollen, und
- Senden, entsprechend dem Kriterienprofil (300), von Transaktionen (400) an die Knoten (110).

11. Netzwerkapplikation (200) nach einem der Ansprüche 8-10, wobei die Netzwerkapplikation (200) weiter eine oder mehrere Knoten (120) umfasst, welche alle innerhalb der Netzwerkapplikation (200) an Knoten (110, 120) gesendeten Transaktionen (400) empfangen und/oder speichern.

12. Netzwerkapplikation (200) nach einem der Ansprüche 8-11, wobei für Transaktionen (400), welche basierend auf einem Kriterienprofil (300) selektiert wurden, ein in Bezug auf eine vollständige Datenreplizierung unabhängiger Übertragungs- und/oder Verarbeitungsmechanismus durchgeführt wird, insbesondere ein beschleunigter Übertragungsmechanismus an einen Knoten (110).

13. Netzwerkapplikation (200) nach Anspruch 12, wobei der Übertragungsmechanismus eine Komponente gleich oder ähnlich zu einem Lightning-Protokoll umfasst.

14. Netzwerkapplikation (200) nach einem der Ansprüche 8-13, wobei mehrere Knoten (110) mit einem zumindest teilweise gleichen Kriterienprofil (300) bei einem Speichern einer gleichen Transaktion (400) eine zusätzliche kryptographische Prüfsumme einschließen, um eine spezifische Netzwerkapplikation für die Knoten (110) zu erzeugen.

15. Netzwerk (100) umfassend einen Knoten (110) nach einem der Ansprüche 1-7 und/oder eine Netzwerkapplikation (200) nach einem der Ansprüche 8-14.
